# EUROPEAN PATENT SPECIFICATION

(11) **EP 4 337 721 B1**
(45) Date of publication and mention of the grant of the patent: **08.04.2026**
(21) Application number: 22725079.2
(22) Date of filing: 04.05.2022
(51) Int. Cl.: C08J 11/08, B29B 17/02, B29K 23/00

(54) **METHOD OF SEPARATING AND PURIFYING A MIXED STREAM OF CONTAMINATED RECLAIMED POLYETHYLENE AND POLYPROPYLENE**
VERFAHREN ZUM TRENNEN UND REINIGEN EINES GEMISCHTEN STROMS AUS KONTAMINIERTEM, WIEDERGEWONNENEN POLYETHYLEN UND POLYPROPYLEN
PROCÉDÉ DE SÉPARATION ET DE PURIFICATION D'UN FLUX MÉLANGÉ DE POLYÉTHYLÈNE ET DE POLYPROPYLÈNE RÉCUPÉRÉS CONTAMINÉS

(30) Priority: 10.05.2021 US 202163186232 P
(43) Date of publication of application: 20.03.2024
(73) Proprietor: The Procter & Gamble Company, Cincinnati, OH 45202 (US)
(72) Inventor: COLLIAS, Dimitris Ioannis, Cincinnati, Ohio 45202 (US); WAUN, Amy Eichstadt, Cincinnati, Ohio 45202 (US); LAYMAN, John Moncrief, Cincinnati, Ohio 45202 (US)
(74) Representative: P&G Patent Germany
(86) International application number: PCT/US2022/027580
(87) International publication number: WO 2022/240625

(56) References cited:
- US-A1- 2019 390 033

## Description

### FIELD OF THE INVENTION

The present invention generally relates to a method of separating and purifying a mixed stream of contaminated reclaimed polyethylene (crPE) and contaminated reclaimed polypropylene (crPP) through the use of solvent extraction, dissolution, settling, and purification steps to produce two separate streams of recycled PE with virgin-like optical properties (vlPE) and recycled PP with virgin-like optical properties (vlPP) using the same production plant in a swing mode.

### BACKGROUND OF THE INVENTION

Synthetic polymers are ubiquitous in daily life due to their relatively low production costs and good balance of material properties. They are used in a wide variety of packaging and product applications, such as consumer goods, automotive components, and medical devices. To meet the high demand of these applications, tens of millions of tons of synthetic polymers are produced globally on an annual basis. The overwhelming majority of these synthetic polymers are produced from increasingly scarce fossil sources, such as petroleum and natural gas. Additionally, the manufacturing of synthetic polymers from fossil sources consumes a lot of energy and, as a result of that, emits a lot of greenhouse gases in the atmosphere. The ubiquitous use of synthetic polymers has consequently resulted in millions of tons of plastic waste being generated every year.

Plastics recycling has emerged as one solution to mitigate the issues associated with the end-of-life of plastics and their leakage to the environment. Recovering and re-using plastics diverts waste from landfills and reduces the demand for virgin plastics made from fossil-based resources, which consequently reduces greenhouse gas emissions. In developed regions, such as the United States and the European Union, rates of plastics recycling are increasing due to greater awareness by consumers, businesses, and industrial manufacturing operations. The majority of recycled materials, including plastics, paper, glass, metals, etc., are mixed into a single stream which is collected and processed by a material recovery facility (MRF). At the MRFs, materials are sorted (e.g. using optical techniques, float - sink, or hand sorting), washed, and packaged for resale. Plastics can be sorted into individual materials, such as high-density polyethylene (HDPE), poly(ethylene terephthalate) (PET), or mixed streams of other common plastics, such as polypropylene (PP), low-density polyethylene (LDPE), poly(vinyl chloride) (PVC), polystyrene (PS), polycarbonate (PC), and polyamides (PA). The single or mixed streams can then be further sorted, washed, and reprocessed into pellets that are suitable for re-use in plastics processing, for example blow and injection molding. However, typically, most streams are mixed streams, such as PE streams that can contain a significant amount (e.g. 20 wt%) of PP, and PP streams that can contain a significant amount of PE.

In addition to these mixed streams containing other polymers and despite that they are washed with aqueous and/or caustic solutions, these streams produce final reprocessed pellets that are highly contaminated with unwanted waste impurities, such as spoiled food residue and residual perfume components. In addition, recycled plastic pellets, except for those from recycled beverage containers, are darkly colored due to the mixture of dyes and pigments commonly used to color plastic articles. While there are some applications that are insensitive to color and contamination (for example, black plastic paint containers and concealed automotive components), the majority of applications require non-colored pellets. The need for high quality, "virgin-like" recycled resin, is especially important for food and drug contact applications, such as food packaging.

Typically, there are five recycling technologies for plastic waste - mechanical, dissolution, depolymerization, pyrolysis, and gasification. Energy expended and greenhouse gases emitted from these recycling processes increase from mechanical to gasification recycling. Also, mechanical recycling cannot separate and purify mixed streams of plastics.

Accordingly, there is a need for a method to separate and purify mixed streams of contaminated reclaimed polyethylene and polypropylene, and produce separate streams of purified polyethylene and polypropylene, each with "virgin-like" optical properties. In addition the method should use only a few and simple unit operations, be economical, and operate in a single plant in swing mode. US20190390033 relates to a method for purifying a reclaimed polymer. The method involves obtaining reclaimed polymer, contacting the reclaimed polymer with a first fluid solvent to produce an extracted reclaimed polymer; then dissolving the extracted reclaimed polymer in a solvent to produce a first solution comprising polymer. The first solution is settled and then filtered. A purer polymer is separated from the resulting solution.

### SUMMARY OF THE INVENTION

In embodiments of the present invention, a method of separating and purifying a mixed stream of contaminated reclaimed polyethylene (crPE) and contaminated reclaimed polypropylene (crPP) to produce separate streams of purified recycled polyethylene with virgin-like optical properties (vlPE) and purified recycled polypropylene with virgin-like optical properties (vlPP) is presented. The method comprises: (a) Extracting said mixed stream of crPE and crPP with a polyethylene (PE) extraction solvent in a PE extractor at a PE extraction temperature, a PE extraction pressure, and a PE extraction mass ratio of said PE extraction solvent to said mixed stream of crPE and crPP to produce a PE light stream and a PE heavy stream; wherein said PE extractor has a nameplate capacity; wherein said crPE forms two phases and said crPP forms one phase in said PE extraction solvent and in said PE extractor; wherein said PE extraction temperature is from about 100°C to about 260°C; wherein said PE extraction pressure is between the cloud point pressure of PE and the cloud point pressure of polypropylene (PP) corresponding to said PE extraction temperature; wherein said PE light stream comprises said crPP, a low molecular weight fraction of crPE (which is soluble in said PE extraction solvent in said PE extractor), and the extractable contamination of said crPE; and wherein said PE heavy stream comprises said crPE minus said low molecular weight fraction of crPE; (b) Dissolving said PE heavy stream in a PE dissolution solvent and in a PE dissolution equipment at a PE dissolution temperature, a PE dissolution pressure, and a PE dissolution mass concentration of at least about 1 wt%; wherein said PE dissolution equipment has a nameplate capacity; wherein said PE dissolution temperature is from about 100°C to about 260°C; wherein said PE dissolution pressure is above the PE cloud point pressure corresponding to said PE dissolution temperature; and wherein a first PE suspension comprising dissolved PE and suspended particulate contaminants is produced; (c) Settling said first PE suspension in a PE settling equipment at a PE settling temperature and a PE settling pressure; wherein said PE settling equipment has a nameplate capacity; wherein said PE settling temperature is from about 100°C to about 260°C; wherein said PE settling pressure is above the PE cloud point pressure corresponding to said PE settling temperature; and wherein a second PE suspension comprising dissolved PE and suspended remaining particulate contaminants is produced; (d) Purifying said second PE suspension in a PE purification equipment at a PE purification temperature and a PE purification pressure by contacting said second PE suspension with solid media; wherein said PE purification equipment has a nameplate capacity; wherein said PE purification temperature is from about 100°C to about 260°C; wherein said PE purification pressure is above the PE cloud point pressure corresponding to said PE purification temperature; and wherein a third PE suspension comprising purer PE is produced; (e) Separating said PE dissolution solvent from said third PE suspension in a PE solvent separation equipment to produce said vlPE; (f) Extracting said PE light stream with a PP extraction solvent in a PP extractor at a PP extraction temperature, a PP extraction pressure, and a PP extraction mass ratio of said PP extraction solvent to said PE light stream to produce a PP light stream and a PP heavy stream; wherein said PP extractor has a nameplate capacity; wherein said crPP forms two phases and said low molecular weight fraction of crPE forms two phases in said PP extraction solvent and in said PP extractor; wherein said PP extraction temperature is from about 100°C to about 260°C; wherein said PP extraction pressure is below the PP cloud point pressure corresponding to said PP extraction temperature; wherein said PP light stream comprises said low molecular weight fraction of crPE, a low molecular weight fraction of crPP (which are soluble in said PP extraction solvent in said PP extractor), and the extractable contamination of said crPP; and wherein said PP heavy stream comprises all of crPP minus said low molecular weight fraction of crPP; (g) Dissolving said PP heavy stream in a PP dissolution solvent and in a PP dissolution equipment at a PP dissolution temperature, a PP dissolution pressure, and a PP dissolution mass concentration of at least about 1 wt%; wherein said PP dissolution equipment has a nameplate capacity; wherein said PP dissolution temperature is from about 100°C to about 260°C; wherein said PP dissolution pressure is above the PP cloud point pressure corresponding to said PP dissolution temperature; and wherein a first PP suspension comprising dissolved PP and suspended particulate contaminants is produced; (h) Settling said first PP suspension in a PP settling equipment at a PP settling temperature and a PP settling pressure; wherein said PP settling equipment has a nameplate capacity; wherein said PP settling temperature is from about 100°C to about 260°C; wherein said PP settling pressure is above the PP cloud point pressure corresponding to said PP settling temperature; and wherein a second PP suspension comprising dissolved PP and suspended remaining particulate contaminants is produced; (i) Purifying said second PP suspension in a PP purification equipment at a PP purification temperature and a PP purification pressure by contacting said second PP suspension with solid media; wherein said PP purification equipment has a nameplate capacity; wherein said PP purification temperature is from about 100°C to about 260°C; wherein said PP purification pressure is above the PP cloud point pressure corresponding to said PP purification temperature; and wherein a third PP suspension comprising purer PP is produced; and (j) Separating said PP dissolution solvent from said third PP suspension in a PP solvent separation equipment to produce said vlPP.

In embodiments of the present invention, a method of separating and purifying a mixed stream of contaminated reclaimed polyethylene (crPE) and contaminated reclaimed polypropylene (crPP) to produce separate streams of purified recycled polyethylene with virgin-like optical properties (vlPE) and purified recycled polypropylene with virgin-like optical properties (vlPP) is presented. The method comprises: (a) Extracting said mixed stream of crPE and crPP with n-butane in a liquid-liquid extractor at about 160°C, about 3000 psig (207 barg), and an extraction mass ratio of said n-butane to said mixed stream of crPE and crPP at least about 10 to produce a PE light stream and a PE heavy stream; wherein said crPE forms two phases and said crPP forms one phase in n-butane and in said liquid-liquid extractor; wherein said PE light stream comprises said crPP, a low molecular weight fraction of crPE (which is soluble in n-butane in said liquid-liquid extractor), and the extractable contamination of said crPE; and wherein said PE heavy stream comprises said crPE minus said low molecular weight fraction of crPE; (b) Dissolving said PE heavy stream in n-butane and in a dissolution equipment at about 160°C, about 4700 psig (324 barg), and a PE dissolution mass concentration of at least about 1 wt%; and wherein a first PE suspension comprising dissolved PE and suspended particulate contaminants is produced; (c) Settling said first PE suspension in a settling equipment at about 160°C and about 4700 psig (324 barg); and wherein a second PE suspension comprising dissolved PE and suspended remaining particulate contaminants is produced; (d) Purifying said second PE suspension in a purification equipment at about 160°C and about 4700 psig (324 barg) by contacting said second PE suspension with solid media; and wherein a third PE suspension comprising purer PE is produced; (e) Separating n-butane from said third PE suspension in a solvent separation equipment to produce said vlPE; (f) Extracting said PE light stream with n-butane in said liquid-liquid extractor at about 160°C, about 1200 psig (83 barg), and a PP extraction mass ratio of said n-butane to said PE light stream at least about 10 to produce a PP light stream and a PP heavy stream; wherein said crPP forms two phases and said low molecular weight fraction of crPE forms two phases in n-butane and in said liquid-liquid extractor; wherein said PP light stream comprises said low molecular weight fraction of crPE, a low molecular weight fraction of crPP (which are soluble in n-butane in said liquid-liquid extractor), and the extractable contamination of said crPP; and wherein said PP heavy stream comprises all of crPP minus said low molecular weight fraction of crPP; (g) Dissolving said PP heavy stream in n-butane and in said dissolution equipment at about 115°C, about 1200 psig (83 barg), and a PP dissolution mass concentration of at least about 1 wt%; and wherein a first PP suspension comprising dissolved PP and suspended particulate contaminants is produced; (h) Settling said first PP suspension in said settling equipment at about 115°C and about 1200 psig (83 barg); and wherein a second PP suspension comprising dissolved PP and suspended remaining particulate contaminants is produced; (i) Purifying said second PP suspension in said purification equipment at about 115°C and about 1200 psig (83 barg) by contacting said second PP suspension with solid media; and wherein a third PP suspension comprising purer PP is produced; and (j) Separating n-butane from said third PP suspension in said solvent separation equipment to produce said vlPP.

### BRIEF DESCRIPTION OF THE DRAWINGS

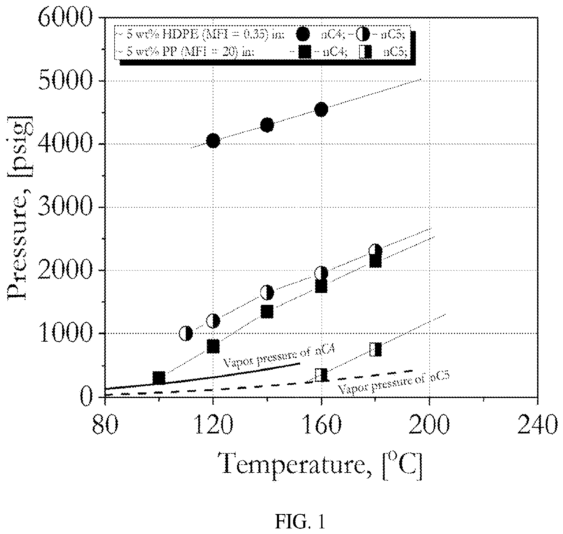

FIG. 1 is a diagram showing the cloud point curves of about 5 wt% solutions of HDPE and PP in normal butane (n-butane) and normal pentane (n-pentane). HDPE is Formolene^{®} HB5502F (Formosa Plastics Corp., Livingston, NJ), which is a blow molding grade and has a melt flow index (MFI) of about 0.35 g/10 min. PP is FT200WV (Braskem America, Inc., Philadelphia, PA), which is an injection molding grade and has an MFI of about 20 g/10 min. The vapor pressure curves of n-butane and n-pentane, up to their respective critical points, are also shown.

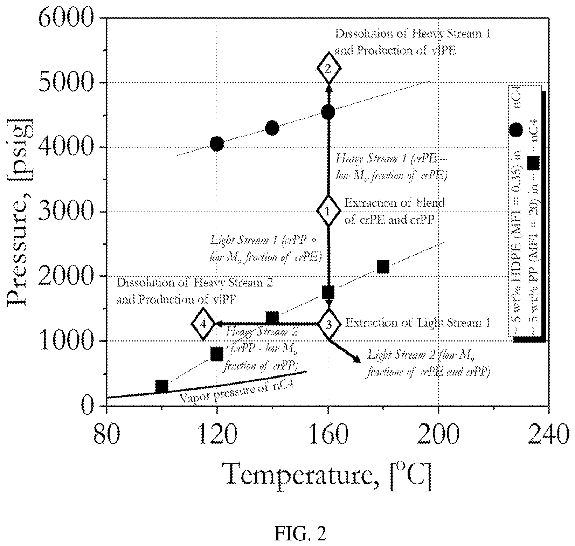

FIG. 2 is a diagram showing the method of the present invention, including the extraction and dissolution steps, on the cloud point diagrams for PE and PP in n-butane. The PE extraction, dissolution, and purification steps are conducted in an isothermal mode, whereas the PP extraction, dissolution, and purification steps are conducted in an isobaric mode. HDPE is Formolene^{®} HB5502F and PP is FT200WV. The vapor pressure curve of n-butane, up to its critical point, is also shown.

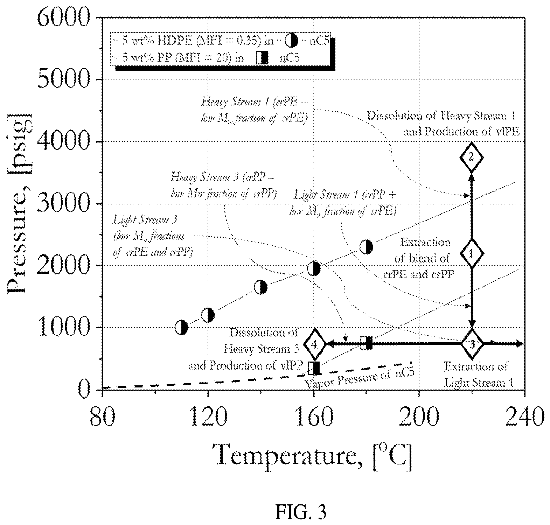

FIG. 3 is a diagram showing the method of the present invention, including the extraction and dissolution steps, on the cloud point diagrams for PE and PP in n-pentane. The PE extraction, dissolution, and purification steps are conducted in an isothermal mode, whereas the PP extraction, dissolution, and purification steps are conducted in an isobaric mode. HDPE is Formolene^{®} HB5502F and PP is FT200WV. The vapor pressure curve of n-pentane, up to its critical point, is also shown.

### DETAILED DESCRIPTION OF THE INVENTION

The present invention includes one or more methods of separating and purifying a mixed stream of contaminated reclaimed polyethylene (crPE) and contaminated reclaimed polypropylene (crPP) through the use of solvent extraction, dissolution, settling, and purification steps to produce two separate streams of recycled PE with virgin-like optical properties (vlPE) and recycled PP with virgin-like optical properties (vlPP) using the same production plant in a swing mode. The crPE can be post-consumer recycled PE (PCR PE), post-industrial recycled PE (PIR PE), or mixtures thereof, and it can also be high-density polyethylene (crHDPE), low-density polyethylene (crLDPE), linear low-density polyethylene (crLLDPE), or mixtures thereof. Similarly, crPP can be post-consumer recycled PP (PCR PP), post-industrial recycled PP (PIR PP), or mixtures thereof, and it can also be homopolymer PP (crhPP), random copolymer PP (crrcPP), block copolymer PP (crbcPP), impact copolymer (cricPP), or mixtures thereof.

### I. Definitions

As used herein, the terms "reclaimed polyethylene" and "reclaimed polypropylene" refer to polyethylene and polypropylene, respectively, that were used for a previous purpose and then collected for the purpose of recycling.

As used herein, the terms "contaminated reclaimed polyethylene" (crPE) and "contaminated reclaimed polypropylene" (crPP) refer to reclaimed polyethylene and polypropylene, respectively, that were contaminated with particulate contaminants and other contaminants. Non-limiting examples of other contaminants are odors, flavors, dyes, surfactants, surface prints, etc. For the purposes of the present invention, the terms crPE and waste PE are used interchangeably. Similarly, For the purposes of the present invention, the terms crPP and waste PP are used interchangeably.

As used herein, the terms "recycled polyethylene" and "recycled polypropylene" refer to products of a recycling process that has been fed with reclaimed polyethylene and polypropylene, respectively.

As used herein, the term "post-consumer recycled" (PCR) material refers to a material in a waste stream that an end consumer has used and disposed of.

As used herein, the term "post-industrial recycled" (PIR) material refers to a material in a waste stream of a manufacturing plant that is produced after the manufacture of a good or product. Non-limiting examples of PIR materials are manufacturing wastes, such as industrial scrap and part trimmings.

As used herein, the term "solvent" refers to a material that dissolves polyethylene or polypropylene and may also be at, near, or above its critical temperature and critical pressure (critical point). It is well known to those having ordinary skill in the art that substances above their critical point are known as "supercritical fluids" which do not have the typical physical properties (i.e., density) of a liquid.

As used herein, the term "dissolved" refers to the partial (at a minimum) incorporation of a polyethylene solute or polypropylene solute in a solvent at the molecular level.

As used herein, the term "standard boiling point" refers to the boiling temperature at an absolute pressure of exactly 100 kPa (1 bar, 14.5 psia, 0.9869 atm) as established by the International Union of Pure and Applied Chemistry (IUPAC).

As used herein, the term "suspension" refers to a suspension of particulate contaminants in a polyethylene or polypropylene solution.

As used herein, the term "particulate contaminants" refers to particulate matter that is present throughout the bulk or surface of polyethylene or polypropylene articles. These particulate contaminants can be additives that suppliers typically incorporate into polyethylene or polypropylene to protect and/or extend their lives, contaminants left onto the polyethylene or polypropylene articles from their consumer use, contaminants attached to the polyethylene or polypropylene articles during their disposal in the waste stream and reclaiming, etc. Non-limiting examples of particulate contaminants, that suppliers incorporate into polyethylene and polypropylene, are antioxidants (either primary or secondary), anti-blocking agents, anti-stat agents, UV stabilizers, flame retardants, and colorants.

As used herein, the term "solid media" refers to media, in particulate, woven, or non-woven shapes, used in filtration operations. These operations can be axial flow or radial flow, or other operations.

As used herein, the terms "purer polyethylene" and "purer polypropylene" refer to polyethylene and polypropylene, respectively, having fewer contaminants relative to the same polyethylene and polypropylene, respectively, prior to a purification step.

As used herein, the term "extraction" refers to the process step of transferring solute species from a liquid phase (or solid matrix) and across a phase boundary to a separate immiscible liquid phase.

As used herein, the term "virgin-like" material means a material that has essentially similar properties and composition to a virgin material.

As used herein, the term "virgin-like optical properties" refers to L* (CIE (Commission Internationale de l'Eclairage) lightness axis; 0 is black and 100 is white) greater than about 82, a* (CIE red-green axis; negative value is green, positive value is red, and 0 is neutral) greater than about - 3, b* (CIE blue-yellow axis; negative value is blue, positive value is yellow, and 0 is neutral) lower than about 5, and Y (CIE contrast ratio opacity) lower than about 50%.

Note that for the purposes of this invention, the terms "plastic" and "polymer" are used interchangeably.

### II. Feedstock - Mixed Stream of Contaminated Reclaimed Polyethylene and Polypropylene

Unexpectedly, it has been found that mixed streams of waste polyethylene and polypropylene can be separated and purified using the same equipment and solvent by operating in various regimes of the cloud point curves of PE and PP in that solvent. Furthermore, the purification of the separate streams of PE and PP is such that the purer PE and PP streams achieve "virgin-like" optical properties.

The feedstock of the present invention is a mixed stream of contaminated reclaimed polyethylene (crPE) and contaminated reclaimed polypropylene (crPP). In embodiments of the present invention, a method of separating and purifying a mixed stream of crPE and crPP to produce separate streams of purified recycled polyethylene with virgin-like optical properties (vlPE) and purified recycled polypropylene with virgin-like optical properties (vlPP) comprises obtaining said mixed stream of crPE and crPP. In embodiments of the present invention, the crPE is at least one of post-consumer recycled (PCR) polyethylene, post-industrial recycled (PIR) polyethylene, special waste stream polyethylene, or mixtures thereof, and the crPP is at least one of PCR polypropylene, PIR polypropylene, special waste stream polypropylene, or mixtures thereof. In embodiments of the present invention, the crPE is at least one of post-consumer recycled (PCR) polyethylene, post-industrial recycled (PIR) polyethylene, or mixtures thereof, and the crPP is at least one of PCR polypropylene, PIR polypropylene, or mixtures thereof.

Non-limiting examples of sources of PCR polyethylene and PCR polypropylene are curbside recycle streams (where end-consumers place used polymers from packages and products into a designated bin for collection by a waste hauler or recycler) and in-store "take-back" programs (where the consumer brings waste polymers into a store and places the waste polymers in a designated collection bin). A non-limiting example of sources of PIR polyethylene and PIR polypropylene are waste polymer streams produced during the manufacture or shipment of a good or product that are collected as unusable material by the manufacturer (i.e., trim scraps, out of specification material, and start-up scrap). Non-limiting examples of sources of special waste streams of polyethylene and polypropylene are recycling of electronic waste (also known as e-waste); recycling of automobiles; and recycling of used carpeting and textiles.

For the purposes of the present invention, crPE is a homogenous composition of an individual polyethylene or a mixture of several different polyethylene compositions. Non-limiting examples of polyethylene compositions are homopolymers and copolymers of ethylene, such as HDPE, LDPE, LLDPE, copolymers of ethylene and alpha-olefins, and other polyethylene polymers that may be apparent to those having ordinary skill in the art. For the purposes of the present invention, crPP is a homogenous composition of an individual polypropylene or a mixture of several different polypropylene compositions. Non-limiting examples of polypropylene compositions are homopolymers and copolymers with ethylene, such as homopolymer, random copolymer, block copolymer, impact copolymer, and other polypropylene polymers that may be apparent to those having ordinary skill in the art.

Non-limiting examples of contamination in crPE and crPP are pigments, dyes, process aids, stabilizing additives (e.g., antioxidants), fillers, flame retardants, and other performance additives that were added to the polyethylene and polypropylene during polymerization or conversion of the original polyethylene and polypropylene to the final form of an article and are necessary for marketing, branding, processability, and/or end use performance. Non-limiting examples of pigments are organic pigments, such as copper phthalocyanine; inorganic pigments, such as titanium dioxide; and other pigments that may be apparent to those having ordinary skill in the art. A non-limiting example of an organic dye is Basic Yellow 51. Non-limiting examples of process aids are antistatic agents, such as glycerol monostearate; and slip-promoting agents, such as erucamide. A non-limiting example of an antioxidant is octadecyl-3-(3,5-di-tert.butyl-4-hydroxyphenyl)-propionate (BASF's Irganox^{®} 1076). Non-limiting examples of fillers are calcium carbonate, talc, and glass fibers. The crPE may also contain odors, surface prints, paper labels, adhesives for labels, dirt, and volatile and non-volatile organic compounds. In addition, contaminants may result from interaction with products, e.g., polyethylene and polypropylene packaging materials that contain cleaning mixtures (e.g. limonene, surfactants, etc.), food (e.g. various organics), etc. The contamination may be particulate (e.g. fillers, dirt, particulate pigments, etc.) or non-particulate (e.g. dyes, odors, surfactants, volatile organic compounds, etc.).

In embodiments of the present invention, said crPE comprises at least one of contaminated reclaimed high-density PE (crHDPE), contaminated reclaimed low-density PE (crLDPE), and contaminated reclaimed linear low-density PE (crLLDPE). In embodiments of the present invention, said crPE is at least one of crHDPE, crLDPE, and crLLDPE.

In embodiments of the present invention, said crPP comprises at least one of contaminated reclaimed homopolymer PP (crhPP), contaminated reclaimed random copolymer PP (crrcPP), contaminated reclaimed block copolymer PP (crbcPP), and contaminated reclaimed impact copolymer of PP (cricPP). In embodiments of the present invention, said crPP is at least one of crhPP, crrcPP, crbcPP, and cricPP.

In embodiments of the present invention, said mixed stream of crPE and crPP comprises at least one of crHDPE, crLDPE, and crLLDPE, and at least one of crhPP, crrcPP, crbcPP, and cricPP.

### III. Swing Plant - Solvent

For the purposes of the present invention, the term "solvent" refers to either the "extraction solvent" or "dissolution solvent", unless it is specifically mentioned as "extraction solvent" or "dissolution solvent".

Polyethylene and polypropylene solutions exhibit a cloud point curve each, which is their liquid-liquid equilibrium curve. A typical method to measure a cloud point curve is with the use of a view cell, as this is well known to those skilled in the art. A solution of a certain amount of polyethylene or polypropylene in a solvent is prepared at a specified temperature and high pressure where the solution is in a one-phase regime. Then, under stirring, the temperature is held constant and the pressure is lowered. At some pressure, called cloud point pressure, the solution becomes cloudy and it enters the two-phase regime, i.e., a heavy phase, which contains high concentration of polyethylene or polypropylene in the solvent, and a light phase, which contains a very low concentration of polyethylene or polypropylene in the solvent. From the two-phase regime, if the pressure is increased then the two-phase system will become a clear solution (one-phase regime) as the pressure crosses the cloud point pressure at that temperature. For the purposes of the present invention, the terms "heavy phase" and "heavy stream", and "light phase" and "light stream" are used interchangeably.

Typical examples of cloud point pressure curves are shown in FIG. 1 with solutions of a virgin HDPE and virgin PP in n-butane and n-pentane at about 5 wt% concentration. Other concentrations of HDPE or PP in solvents or concentrations of various polyethylene grades (such as HDPE, LDPE, and LLDPE) or polypropylene grades (such as homopolymer and copolymer) in solvents could shift these cloud point curves shown in FIG. 1 in the pressure / temperature space. For the purposes of the present invention, we consider a solution with about 5 wt% virgin HDPE Formolene^{®} HB5502F or virgin PP FT200WV in a solvent as the reference solution.

The normal boiling points of some solvents are as follows: iso-butane: - 11.7°C; iso-butylene: - 6.9°C; 1-butene: - 6.3°C; n-butane: - 1°C; 2-butene: 0.8 - 3.7°C; neo-pentane: 9.5°C; iso-pentane: 27.8°C; 1-pentene: 30°C; n-pentane: 36.1°C; 2-pentene: 36.3°C; iso-hexane: 60°C; 1-hexene: 63.9°C; n-hexane: 68°C; and 2-hexene: 69.1°C. In embodiments of the present invention, the solvent has a normal boiling point less than about 50°C. In embodiments of the present invention, the solvent has a normal boiling point less than about 40°C. In embodiments of the present invention, the solvent has a normal boiling point less than about 20°C. In embodiments of the present invention, the solvent has a normal boiling point less than about 0°C.

In embodiments of the present invention, the solvent comprises n-pentane. In embodiments of the present invention, the solvent comprises n-butane. In embodiments of the present invention, the solvent is at least one of 1-pentene, iso-pentane, neo-pentane, 2-butene, 1-butene, iso-butane, or mixtures thereof. In embodiments of the present invention, the solvent is n-pentane. In embodiments of the present invention, the solvent is n-butane. In embodiments of the present invention, the solvent is hexanes.

In embodiments of the present invention, the solvent and the crPP of the mixed stream of crPE and crPP form a one-phase solution at a temperature and at a pressure higher than and a two-phase system at a temperature and at a pressure lower than the cloud point pressure corresponding to said temperature; wherein said cloud point pressure: (i) corresponds to a solution of said crPP in said solvent at about 5 wt% concentration; (ii) is a monotonically increasing function of temperature; (iii) is about 900 psig (62 barg) or higher at about 120°C, is about 1,350 psig (93 barg) or higher at about 140°C, is about 1,750 psig (121 barg) or higher at about 160°C, and is about 2,150 psig (148 barg) or higher at about 180°C; (iv) includes smooth extrapolations at temperatures lower than about 120°C and higher than about 180°C; and (v) includes smooth interpolations at temperatures from about 120°C to about 180°C.

In embodiments of the present invention, the solvent and the crPP of the mixed stream of crPE and crPP form a one-phase solution at a temperature and at a pressure higher than and a two-phase system at a temperature and at a pressure lower than the cloud point pressure corresponding to said temperature; wherein said cloud point pressure: (i) corresponds to a solution of said crPP in said solvent at about 5 wt% concentration; (ii) is a monotonically increasing function of temperature; (iii) is about 350 psig (24 barg) or higher at about 160°C and is about 750 psig (52 barg) or higher at about 180°C; (iv) includes smooth extrapolations at temperatures lower than about 160°C and higher than about 180°C; and (v) includes smooth interpolations at temperatures from about 160°C to about 180°C.

In embodiments of the present invention, the solvent and the crPP of the mixed stream of crPE and crPP form a one-phase solution at a temperature and at a pressure higher than and a two-phase system at a temperature and at a pressure lower than the cloud point pressure corresponding to said temperature; wherein said cloud point pressure: (i) corresponds to a solution of said crPP in said solvent at about 5 wt% concentration; (ii) is a monotonically increasing function of temperature; (iii) is about 225 psig (15.5 barg) or higher at about 200°C and is about 575 psig (40 barg) or higher at about 220°C; (iv) includes smooth extrapolations at temperatures lower than about 200°C and higher than about 220°C; and (v) includes smooth interpolations at temperatures from about 200°C to about 220°C.

In embodiments of the present invention, the solvent and the crPE of the mixed stream of crPE and crPP form a one-phase solution at a temperature and at a pressure higher than and a two-phase system at a temperature and at a pressure lower than the cloud point pressure corresponding to said temperature; wherein said cloud point pressure: (i) corresponds to a solution of said crPE in said solvent at about 5 wt% concentration; (ii) is a monotonically increasing function of temperature; (iii) is about 4,050 psig (279 barg) or higher at about 120°C, is about 4,300 psig (296 barg) or higher at about 140°C, and is about 4,550 psig (314 barg) or higher at about 160°C; (iv) includes smooth extrapolations at temperatures lower than about 120°C and higher than about 160°C; and (v) includes smooth interpolations at temperatures from about 120°C to about 160°C.

In embodiments of the present invention, the solvent and the crPE of the mixed stream of crPE and crPP form a one-phase solution at a temperature and at a pressure higher than and a two-phase system at a temperature and at a pressure lower than the cloud point pressure corresponding to said temperature; wherein said cloud point pressure: (i) corresponds to a solution of said crPE in said solvent at about 5 wt% concentration; (ii) is a monotonically increasing function of temperature; (iii) is about 1,200 psig (83 barg) or higher at about 120°C, is about 1,650 psig (114 barg) or higher at about 140°C, is about 1,950 psig (134 barg) or higher at about 160°C, and is about 2,300 psig (159 barg) or higher at about 180°C; (iv) includes smooth extrapolations at temperatures lower than about 120°C and higher than about 180°C; and (v) includes smooth interpolations at temperatures from about 120°C to about 180°C.

In embodiments of the present invention, the solvent and the crPE of the mixed stream of crPE and crPP form a one-phase solution at a temperature and at a pressure higher than and a two-phase system at a temperature and at a pressure lower than the cloud point pressure corresponding to said temperature; wherein said cloud point pressure: (i) corresponds to a solution of said crPE in said solvent at about 5 wt% concentration; (ii) is a monotonically increasing function of temperature; (iii) is about 400 psig (28 barg) or higher at about 160°C, is about 900 psig (62 barg) or higher at about 180°C, is about 1,225 psig (84 barg) or higher at about 200°C, and is about 1,525 psig (105 barg) or higher at about 220°C; (iv) includes smooth extrapolations at temperatures lower than about 160°C and higher than about 220°C; and (v) includes smooth interpolations at temperatures from about 160°C to about 220°C.

### IV. Swing Plant - Parallel and Sequential Modes of Operation

In this invention, a swing plant produces vlPE and vlPP from a mixed stream of crPE and crPP (also referred to as "mixed feedstock stream"). The typical steps of the process are extraction, dissolution, settling, purification, and solvent separation, and the process uses a solvent. The equipment used in the process includes extractor, dissolution equipment, settling equipment, purification equipment, and solvent separation equipment.

In one mode of operation (i.e., parallel production of vlPE and vlPP), the swing plant separates the mixed feedstock stream in PE extractor. Then, the crPE stream flows into the PE dissolution equipment, PE settling equipment, PE purification equipment, PE solvent separation equipment, and it finally produces vlPE. In parallel, the crPP stream flows in the PP extractor, PP dissolution equipment, PP settling equipment, PP purification equipment, PP solvent separation equipment, and it finally produces vlPP. Thus, in this mode of operation, vlPE and vlPP are produced in parallel. In embodiments of the present invention, said vlPE is produced in parallel with said vlPP.

In another mode of operation (i.e., sequential production of vlPE and vlPP), the swing plant operates in two cycles that start with separating the mixed feedstock stream in PE extractor. Then, in the first cycle, the crPE stream flows into the PE dissolution equipment, PE settling equipment, PE purification equipment, PE solvent separation equipment, and it finally produces vlPE. In parallel, the crPP stream gets accumulated after PE extractor up to an amount that is equal to the nameplate capacity of the PE dissolution equipment, PE settling equipment, PE purification equipment, and PE solvent separation equipment. At that point, production of vlPE stops, the second cycle starts, and the crPP stream is fed into PE extractor, PE dissolution equipment, PE settling equipment, PE purification equipment, PE solvent separation equipment, and it finally produces vlPP. Thus, in this mode, vlPE and vlPP are produced in sequence (vlPE first and vlPP next).

In embodiments of the present invention, said vlPE is produced first and said vlPP is produced next; said PE light stream is collected during the production of said vlPE; said PE light stream is then fed into said PE extractor; said PP extractor is the same as said PE extractor, said PP dissolution equipment is the same as said PE dissolution equipment, said PP settling equipment is the same as said PE settling equipment, said PP purification equipment is the same as said PE purification equipment, and said PP solvent separation equipment is the same as PE solvent separation equipment. Examples of swing plant operations are shown in FIG. 2 and FIG. 3.

### V. Swing Plant - Extraction

Since the cloud point curve of polypropylene is lower than that of polyethylene, the extraction step allows separation of the mixed stream comprising crPE and crPP by operating the extraction in the two-phase regime for polyethylene and one-phase regime for polypropylene. The separation is achieved as the extraction step generates two streams: the heavy stream, that contains the crPE minus a low molecular weight fraction of crPE, and the light stream, that contains the crPP, the low molecular weight fraction of crPE (that did not go into the heavy stream and is soluble in the light stream under the extraction conditions), and the extractable contamination of crPE. Extractable contamination is part of the contamination of crPE and it might include residual processing aids added to PE, residual product formulations which contacted PE, such as perfumes and flavors, dyes, and any other extractable material that may have been intentionally added or unintentionally became incorporated into PE during waste collection and subsequent accumulation with other waste materials.

The extraction step is conducted in the liquid-liquid mode. Non-limiting examples of liquid-liquid extraction (LLE) equipment, that can be used in this extraction step, are extraction columns (e.g., static, agitated, or pulsed), mixer - settlers, and centrifugal extractors. Examples of commercial equipment, that can be used, are Kühni columns, SCHEIBEL^{®} columns, KARR^{®} columns, rotating disc contractor columns, packed columns, sieve columns, etc.

In embodiments of the present invention, a method of separating and purifying a mixed stream of contaminated reclaimed polyethylene (crPE) and contaminated reclaimed polypropylene (crPP) to produce separate streams of purified recycled polyethylene with virgin-like optical properties (vlPE) and purified recycled polypropylene with virgin-like optical properties (vlPP) comprises: (a) extracting said mixed stream of crPE and crPP with a PE extraction solvent in a PE extractor at a PE extraction temperature, a PE extraction pressure, and a PE extraction mass ratio of said PE extraction solvent to said mixed stream of crPE and crPP to produce a PE light stream and a PE heavy stream; wherein said PE extractor has a nameplate capacity; wherein said crPE forms two phases and said crPP forms one phase in said PE extraction solvent and in said PE extractor; wherein said PE extraction temperature is from about 100°C to about 260°C; wherein said PE extraction pressure is between the cloud point pressure of polyethylene (PE) and the cloud point pressure of polypropylene (PP) corresponding to said PE extraction temperature; wherein said PE light stream comprises said crPP, a low molecular weight fraction of crPE (which is soluble in said PE extraction solvent in said PE extractor), and the extractable contamination of crPE; and wherein said PE heavy stream comprises said crPE minus said low molecular weight fraction of crPE, and (b) extracting said PE light stream with a PP extraction solvent in a PP extractor at a PP extraction temperature, a PP extraction pressure, and a PP extraction mass ratio of said PP extraction solvent to said PE light stream to produce a PP light stream and a PP heavy stream; wherein said PP extractor has a nameplate capacity; wherein said crPP forms two phases and said low molecular weight fraction of crPE forms two phases in said PP extraction solvent and in said PP extractor; wherein said PP extraction temperature is from about 100°C to about 260°C; wherein said PP extraction pressure is below the PP cloud point pressure corresponding to said PP extraction temperature; wherein said PP light stream comprises said low molecular weight fraction of crPE, a low molecular weight fraction of crPP (which are soluble in said PP extraction solvent in said PP extractor), and the extractable contamination of said crPP; and wherein said PP heavy stream comprises all of crPP minus said low molecular weight fraction of crPP.

In embodiments of the present invention, a method of separating and purifying a mixed stream of contaminated reclaimed polyethylene (crPE) and contaminated reclaimed polypropylene (crPP) to produce separate streams of purified recycled polyethylene with virgin-like optical properties (vlPE) and purified recycled polypropylene with virgin-like optical properties (vlPP) comprises: (a) extracting said mixed stream of crPE and crPP with n-butane in a liquid-liquid extractor at about 160°C, about 3000 psig (207 barg), and an extraction mass ratio of said n-butane to said mixed stream of crPE and crPP at least about 10 to produce a PE light stream and a PE heavy stream; wherein said crPE forms two phases and said crPP forms one phase in n-butane and in said liquid-liquid extractor; wherein said PE light stream comprises said crPP, a low molecular weight fraction of crPE (which is soluble in n-butane in said liquid-liquid extractor), and the extractable contamination of said crPE; and wherein said PE heavy stream comprises said crPE minus said low molecular weight fraction of crPE, and (b) extracting said PE light stream with n-butane in said liquid-liquid extractor at about 160°C, about 1200 psig (83 barg), and a PP extraction mass ratio of said n-butane to said PE light stream at least about 10 to produce a PP light stream and a PP heavy stream; wherein said crPP forms two phases and said low molecular weight fraction of crPE forms two phases in n-butane and in said liquid-liquid extractor; wherein said PP light stream comprises said low molecular weight fraction of crPE, a low molecular weight fraction of crPP (which are soluble in n-butane in said liquid-liquid extractor), and the extractable contamination of said crPP; and wherein said PP heavy stream comprises all of crPP minus said low molecular weight fraction of crPP.

In embodiments of the present invention, a method of separating and purifying a mixed stream of contaminated reclaimed polyethylene (crPE) and contaminated reclaimed polypropylene (crPP) to produce separate streams of purified recycled polyethylene with virgin-like optical properties (vlPE) and purified recycled polypropylene with virgin-like optical properties (vlPP) comprises: (a) extracting said mixed stream of crPE and crPP with n-pentane in a liquid-liquid extractor at about 205°C, about 1900 psig (131 barg), and an extraction mass ratio of said n-pentane to said mixed stream of crPE and crPP at least about 10 to produce a PE light stream and a PE heavy stream; wherein said crPE forms two phases and said crPP forms one phase in n-pentane and in said liquid-liquid extractor; wherein said PE light stream comprises said crPP, a low molecular weight fraction of crPE (which is soluble in n-pentane in said liquid-liquid extractor), and the extractable contamination of said crPE; and wherein said PE heavy stream comprises said crPE minus said low molecular weight fraction of crPE, and (b) extracting said PE light stream with n-pentane in said liquid-liquid extractor at about 205°C, about 750 psig (52 barg), and a PP extraction mass ratio of said n-pentane to said PE light stream at least about 10 to produce a PP light stream and a PP heavy stream; wherein said crPP forms two phases and said low molecular weight fraction of crPE forms two phases in n-pentane and in said liquid-liquid extractor; wherein said PP light stream comprises said low molecular weight fraction of crPE, a low molecular weight fraction of crPP (which are soluble in n-pentane in said liquid-liquid extractor), and the extractable contamination of said crPP; and wherein said PP heavy stream comprises all of crPP minus said low molecular weight fraction of crPP.

In embodiments of the present invention, the extraction step takes place in a pressure vessel that may be configured in a way that allows for continuous extraction of the polyethylene or polypropylene with the solvent. In embodiments of the present invention, the pressure vessel may be a continuous liquid-liquid extraction column, where molten polyethylene or polypropylene is pumped into one end of the extraction column and the solvent is pumped into the same (co-current extraction) or the opposite end (counter-current extraction) of the extraction column.

In embodiments of the present invention, the light stream containing the extracted contamination is removed from the process. In embodiments of the present invention, the solvent in the light stream is recovered, purified, and recycled for use in the extraction step or a different step in the method. In embodiments of the present invention, the extraction step is performed in a batch mode, wherein the crPE or crPP are fixed in a pressure vessel as a polymer phase and the solvent is continuously pumped through the fixed polymer phase. The extraction time or the amount of solvent used will depend on the desired purity of the final vlPE or vlPP and the amount of extractable contamination in the starting crPE or crPP. In embodiments of the present invention, the solvent containing the extracted contamination is contacted with solid media in a separate step as described in the purification section below.

In embodiments of the present invention, the PE extraction mass ratio of the PE extraction solvent to the mixed stream of crPE and crPP or the PP extraction mass ratio of the PP extraction solvent to the PE light stream is at least about 1. In embodiments of the present invention, the PE extraction mass ratio of the PE extraction solvent and the mixed stream of crPE and crPP or the PP extraction mass ratio of the PP extraction solvent to the PE light stream is at least about 5. In embodiments of the present invention, the PE extraction mass ratio of the PE extraction solvent and the mixed stream of crPE and crPP or the PP extraction mass ratio of the PP extraction solvent to the PE light stream is at least about 10. In embodiments of the present invention, the PE extraction mass ratio of the PE extraction solvent and the mixed stream of crPE and crPP or the PP extraction mass ratio of the PP extraction solvent to the PE light stream is at least about 20.

In embodiments of the present invention, the PE extraction solvent is n-butane, the PE extraction temperature is from about 100°C to about 260°C, and the PE extraction pressure is from about 1000 psig (69 barg) to about 4000 psig (276 barg). In embodiments of the present invention, the PE extraction solvent is n-butane, the PE extraction temperature is from about 110°C to about 200°C, and the PE extraction pressure is from about 1200 psig (83 barg) to about 3000 psig (207 barg). In embodiments of the present invention, the PE extraction solvent is n-butane, the PE extraction temperature is about 140°C, and the PE extraction pressure is about 2500 psig (172 barg). In embodiments of the present invention, the PE extraction solvent is n-butane, the PE extraction temperature is about 160°C, and the PE extraction pressure is about 3000 psig (207 barg).

In embodiments of the present invention, the PP extraction solvent is n-butane, the PP extraction temperature is from about 120°C to about 260°C, and the PP extraction pressure is from about 500 psig (34 barg) to about 3000 psig (207 barg). In embodiments of the present invention, the PP extraction solvent is n-butane, the PP extraction temperature is from about 140°C to about 200°C, and the PP extraction pressure is from about 750 psig (52 barg) to about 1500 psig (103 barg). In embodiments of the present invention, the PP extraction solvent is n-butane, the PP extraction temperature is about 140°C, and the PP extraction pressure is about 900 psig (62 barg). In embodiments of the present invention, the PP extraction solvent is n-butane, the PP extraction temperature is about 160°C, and the PP extraction pressure is about 1200 psig (83 barg).

In embodiments of the present invention, the PE extraction solvent is n-pentane, the PE extraction temperature is from about 120°C to about 240°C, and the PE extraction pressure is from about 200 psig (14 barg) to about 2500 psig (172 barg). In embodiments of the present invention, the PE extraction solvent is n-pentane, the PE extraction temperature is from about 140°C to about 220°C, and the PE extraction pressure is from about 500 psig (34 barg) to about 2200 psig (152 barg). In embodiments of the present invention, the PE extraction solvent is n-pentane, the PE extraction temperature is about 205°C, and the PE extraction pressure is about 1900 psig (131 barg). In embodiments of the present invention, the PE extraction solvent is n-pentane, the PE extraction temperature is about 220°C, and the PE extraction pressure is about 2100 psig (145 barg).

In embodiments of the present invention, the PP extraction solvent is n-pentane, the PP extraction temperature is from about 180°C to about 240°C, and the PP extraction pressure is from about 500 psig (34 barg) to about 1700 psig (117 barg). In embodiments of the present invention, the PP extraction solvent is n-pentane, the PP extraction temperature is from about 200°C to about 220°C, and the PP extraction pressure is from about 750 psig (52 barg) to about 1000 psig (69 barg). In embodiments of the present invention, the PP extraction solvent is n-pentane, the PP extraction temperature is about 205°C, and the PP extraction pressure is about 900 psig (62 barg). In embodiments of the present invention, the PP extraction solvent is n-pentane, the PP extraction temperature is about 220°C, and the PP extraction pressure is about 900 psig (62 barg).

### VI. Swing Plant - Dissolution

In the dissolution step, the PE or PP heavy streams are brought into the one-phase regime of the PE and PE dissolution solvent system or PP and PP dissolution solvent system by changing the pressure and/or temperature so that the PE or PP dissolution pressures are higher than the PE or PP cloud point pressure corresponding to the PE or PP dissolution temperature. The dissolution is aided with mixing at the dissolution temperature and pressure, that can be achieved in typical equipment, such as mixing columns and vessels, static systems, etc. Once the PE or PP are dissolved into the PE or PP dissolution solvent in this dissolution step, the particulate contaminants (e.g. pigments, fillers, dirt, etc.), which are part of the crPE or crPP, will be released from PE or PP and be suspended, thus forming a first PE or PP suspension.

In embodiments of the present invention, a method of separating and purifying a mixed stream of contaminated reclaimed polyethylene (crPE) and contaminated reclaimed polypropylene (crPP) to produce separate streams of purified recycled polyethylene with virgin-like optical properties (vlPE) and purified recycled polypropylene with virgin-like optical properties (vlPP) comprises: (a) Dissolving said PE heavy stream in a PE dissolution solvent and a PE dissolution equipment at a PE dissolution temperature, a PE dissolution pressure, and a PE dissolution mass concentration of at least about 1 wt%; wherein said PE dissolution equipment has a nameplate capacity; wherein said PE dissolution temperature is from about 100°C to about 260°C; wherein said PE dissolution pressure is above the PE cloud point pressure corresponding to said PE dissolution temperature; and wherein a first PE suspension comprising dissolved PE and suspended particulate contaminants is produced; and (b) Dissolving said PP heavy stream in a PP dissolution solvent and a PP dissolution equipment at a PP dissolution temperature, a PP dissolution pressure, and a PP dissolution mass concentration of at least about 1 wt%; wherein said PP dissolution equipment has a nameplate capacity; wherein said PP dissolution temperature is from about 100°C to about 260°C; wherein said PP dissolution pressure is above the PP cloud point pressure corresponding to said PP dissolution temperature; and wherein a first PP suspension comprising dissolved PP and suspended particulate contaminants is produced.

In embodiments of the present invention, a method of separating and purifying a mixed stream of contaminated reclaimed polyethylene (crPE) and contaminated reclaimed polypropylene (crPP) to produce separate streams of purified recycled polyethylene with virgin-like optical properties (vlPE) and purified recycled polypropylene with virgin-like optical properties (vlPP) comprises: (a) Dissolving said PE heavy stream in n-butane and in a dissolution equipment at about 160°C, about 4700 psig (324 barg), and a PE dissolution mass concentration of at least about 1 wt%; and wherein a first PE suspension comprising dissolved PE and suspended particulate contaminants is produced; and (b) Dissolving said PP heavy stream in n-butane and in said dissolution equipment at about 115°C, about 1200 psig (83 barg), and a PP dissolution mass concentration of at least about 1 wt%; and wherein a first PP suspension comprising dissolved PP and suspended particulate contaminants is produced.

In embodiments of the present invention, a method of separating and purifying a mixed stream of contaminated reclaimed polyethylene (crPE) and contaminated reclaimed polypropylene (crPP) to produce separate streams of purified recycled polyethylene with virgin-like optical properties (vlPE) and purified recycled polypropylene with virgin-like optical properties (vlPP) comprises: (a) Dissolving said PE heavy stream in n-pentane and in a dissolution equipment at about 140°C, about 1900 psig (131 barg), and a PE dissolution mass concentration of at least about 1 wt%; and wherein a first PE suspension comprising dissolved PE and suspended particulate contaminants is produced; and (b) Dissolving said PP heavy stream in n-pentane and in said dissolution equipment at about 140°C, about 750 psig (52 barg), and a PP dissolution mass concentration of at least about 1 wt%; and wherein a first PP suspension comprising dissolved PP and suspended particulate contaminants is produced.

In embodiments of the present invention, said PE extraction solvent is the same as said PE dissolution solvent. In embodiments of the present invention, said PP extraction solvent is the same as said PP dissolution solvent. In embodiments of the present invention, said PE extraction solvent and said PE dissolution solvent are all n-butane. In embodiments of the present invention, said PP extraction solvent and said PP dissolution solvent are all n-butane. In embodiments of the present invention, said PE extraction solvent and said PE dissolution solvent are all n-pentane. In embodiments of the present invention, said PP extraction solvent and said PP dissolution solvent are all n-pentane.

In embodiments of the present invention, the PE dissolution mass concentration or PP dissolution mass concentration is at least about 1 wt%. In embodiments of the present invention, the PE dissolution mass concentration or PP dissolution mass concentration is at least about 2 wt%. In embodiments of the present invention, the PE dissolution mass concentration or PP dissolution mass concentration is at least about 3 wt%. In embodiments of the present invention, the PE dissolution mass concentration or PP dissolution mass concentration is at least about 5 wt%. In embodiments of the present invention, the PE dissolution mass concentration or PP dissolution mass concentration is at least about 10 wt%.

In embodiments of the present invention, the PE or PP dissolution temperature is from about 100°C to about 260°C. In embodiments of the present invention, the PE or PP dissolution temperature is from about 140°C to about 240°C. In embodiments of the present invention, the PE or PP dissolution temperature is from about 160°C to about 220°C. In embodiments of the present invention, the PE or PP dissolution temperature is from about 180°C to about 200°C. In embodiments of the present invention, the PE or PP dissolution temperature is about 120°C. In embodiments of the present invention, the PE or PP dissolution temperature is about 140°C. In embodiments of the present invention, the PE or PP dissolution temperature is about 160°C. In embodiments of the present invention, the PE or PP dissolution temperature is about 180°C.

In embodiments of the present invention, the PE or PP dissolution pressure is from about 700 psig (48.3 barg) to about 6,000 psig (413.7 barg). In embodiments of the present invention, the PE or PP dissolution pressure is from about 1,500 psig (103.4 barg) to about 5,000 psig (344.7 barg). In embodiments of the present invention, the PE or PP dissolution pressure is from about 2,000 psig (137.9 barg) to about 4,000 psig (275.8 barg). In embodiments of the present invention, the PE or PP dissolution pressure is about 1,500 psig (103.4 barg). In embodiments of the present invention, the PE or PP dissolution pressure is about 1,900 psig (131 barg). In embodiments of the present invention, the PE or PP dissolution pressure is about 2,500 psig (172.4 barg). In embodiments of the present invention, the PE or PP dissolution pressure is about 4,500 psig (310.3 barg).

In embodiments of the present invention, the PE dissolution solvent is n-butane, the PE dissolution temperature is from about 100°C to about 260°C, and the PE dissolution pressure is from about 3800 psig (262 barg) to about 6000 psig (414 barg). In embodiments of the present invention, the PE dissolution solvent is n-butane, the PE dissolution temperature is from about 110°C to about 200°C, and the PE dissolution pressure is from about 4000 psig (276 barg) to about 5000 psig (345 barg). In embodiments of the present invention, the PE dissolution solvent is n-butane, the PE dissolution temperature is about 140°C, and the PE dissolution pressure is about 4500 psig (310 barg). In embodiments of the present invention, the PE dissolution solvent is n-butane, the PE dissolution temperature is about 160°C, and the PE dissolution pressure is about 4700 psig (324 barg).

In embodiments of the present invention, the PP dissolution solvent is n-butane, the PP dissolution temperature is from about 120°C to about 260°C, and the PP dissolution pressure is from about 1000 psig (69 barg) to about 3500 psig (241 barg). In embodiments of the present invention, the PP dissolution solvent is n-butane, the PP dissolution temperature is from about 140°C to about 200°C, and the PP dissolution pressure is from about 1200 psig (83 barg) to about 2500 psig (172 barg). In embodiments of the present invention, the PP dissolution solvent is n-butane, the PP dissolution temperature is about 140°C, and the PP dissolution pressure is about 1900 psig (131 barg). In embodiments of the present invention, the PP dissolution solvent is n-butane, the PP dissolution temperature is about 160°C, and the PP dissolution pressure is about 2500 psig (172 barg).

In embodiments of the present invention, the PE dissolution solvent is n-pentane, the PE dissolution temperature is from about 120°C to about 240°C, and the PE dissolution pressure is from about 1500 psig (103 barg) to about 4000 psig (276 barg). In embodiments of the present invention, the PE dissolution solvent is n-pentane, the PE dissolution temperature is from about 140°C to about 220°C, and the PE dissolution pressure is from about 2000 psig (138 barg) to about 3500 psig (241 barg). In embodiments of the present invention, the PE dissolution solvent is n-pentane, the PE dissolution temperature is about 205°C, and the PE dissolution pressure is about 3000 psig (207 barg). In embodiments of the present invention, the PE dissolution solvent is n-pentane, the PE dissolution temperature is about 220°C, and the PE dissolution pressure is about 3500 psig (221 barg).

In embodiments of the present invention, the PP dissolution solvent is n-pentane, the PP dissolution temperature is from about 180°C to about 240°C, and the PP dissolution pressure is from about 1000 psig (69 barg) to about 3000 psig (207 barg). In embodiments of the present invention, the PP dissolution solvent is n-pentane, the PP dissolution temperature is from about 200°C to about 220°C, and the PP dissolution pressure is from about 1500 psig (103 barg) to about 2000 psig (138 barg). In embodiments of the present invention, the PP dissolution solvent is n-pentane, the PP dissolution temperature is about 205°C, and the PP dissolution pressure is about 1700 psig (117 barg). In embodiments of the present invention, the PP dissolution solvent is n-pentane, the PP dissolution temperature is about 220°C, and the PP dissolution pressure is about 2000 psig (138 barg).

### VII. Swing Plant - Settling

After the PE or PP dissolution is achieved and the first PE or PP suspension is formed, the suspended contaminants are settled (in the settling operation and settling equipment) by experiencing a force that uniformly moves them in the direction of the force. Typically, the applied settling force is gravity, but can also be a centrifugal, centripetal, or other force. The amount of applied force and duration of the settling operation (settling time) will depend upon several parameters, including, but not limited to, particle size of the contaminant particles, contaminant particle density, density of the solution, and viscosity of the solution. Some of the key parameters that determine the solution viscosity are the chemical composition of the solvent, the molecular weight and concentration of the PE or PP dissolved in the solvent, and the temperature and pressure of the solution. At the end of the settling operation, a layer of settled particulate contaminants and a second suspension are produced. The second suspension includes the suspended remaining particulate contaminants, that have not been settled in the settled layer. Typically, the larger contaminant particles are settled, and the smaller contaminant particles are suspended in the second suspension. Typically, the temperature, pressure, and concentration conditions of the settling operation are the same as those of the dissolution step. Processing aids to help the settling operation, such as flocculation aids, can also be added in the first suspension or in the contaminated reclaimed PE or PP or at any point in this method.

In embodiments of the present invention, a method of separating and purifying a mixed stream of contaminated reclaimed polyethylene (crPE) and contaminated reclaimed polypropylene (crPP) to produce separate streams of purified recycled polyethylene with virgin-like optical properties (vlPE) and purified recycled polypropylene with virgin-like optical properties (vlPP) comprises: (a) Settling said first PE suspension in a PE settling equipment at a PE settling temperature and a PE settling pressure; wherein said PE settling equipment has a nameplate capacity; wherein said PE settling temperature is from about 100°C to about 260°C; wherein said PE settling pressure is above the PE cloud point pressure corresponding to said PE settling temperature; and wherein a second PE suspension comprising dissolved PE and suspended remaining particulate contaminants is produced; and (b) Settling said first PP suspension in a PP settling equipment at a PP settling temperature and a PP settling pressure; wherein said PP settling equipment has a nameplate capacity; wherein said PP settling temperature is from about 100°C to about 260°C; wherein said PP settling pressure is above the PP cloud point pressure corresponding to said PP settling temperature; and wherein a second PP suspension comprising dissolved PP and suspended remaining particulate contaminants is produced.

In embodiments of the present invention, a method of separating and purifying a mixed stream of contaminated reclaimed polyethylene (crPE) and contaminated reclaimed polypropylene (crPP) to produce separate streams of purified recycled polyethylene with virgin-like optical properties (vlPE) and purified recycled polypropylene with virgin-like optical properties (vlPP) comprises: (a) Settling said first PE suspension in a settling equipment at about 160°C and about 4700 psig (324 barg); and wherein a second PE suspension comprising dissolved PE and suspended remaining particulate contaminants is produced; and (b) Settling said first PP suspension in said settling equipment at about 115°C and about 1200 psig (83 barg); and wherein a second PP suspension comprising dissolved PP and suspended remaining particulate contaminants is produced.

In embodiments of the present invention, a method of separating and purifying a mixed stream of contaminated reclaimed polyethylene (crPE) and contaminated reclaimed polypropylene (crPP) to produce separate streams of purified recycled polyethylene with virgin-like optical properties (vlPE) and purified recycled polypropylene with virgin-like optical properties (vlPP) comprises: (a) Settling said first PE suspension in a settling equipment at about 140°C and about 1900 psig (131 barg); and wherein a second PE suspension comprising dissolved PE and suspended remaining particulate contaminants is produced; and (b) Settling said first PP suspension in said settling equipment at about 140°C and about 750 psig (52 barg); and wherein a second PP suspension comprising dissolved PP and suspended remaining particulate contaminants is produced.

In embodiments of the present invention, the PE settling temperature is the same as the PE dissolution temperature. In embodiments of the present invention, the PE settling pressure is the same as the PE dissolution pressure. In embodiments of the present invention, the PP settling temperature is the same as the PP dissolution temperature. In embodiments of the present invention, the PP settling pressure is the same as the PP dissolution pressure.

### VIII. Swing Plant - Purification

The purification of the second PE or PP suspension proceeds by contacting said second PE or PP suspension with solid media. For the purposes of the present invention, the solid media are any solid materials that remove at least some of the contamination (particulate or not) from the second PE or PP suspension. Although not wishing to be bound by any theory, Applicant believes that the solid media remove the contamination by a variety of mechanisms. Non-limiting examples of possible mechanisms include adsorption, absorption, size exclusion, ion exclusion, ion exchange, and other mechanisms that are well known to those having ordinary skill in the art. Furthermore, the pigments and other contaminants commonly found in crPE or crPP may be polar compounds and may preferentially interact with the solid media, which may also be at least slightly polar. The polar-polar interactions are especially favorable when a non-polar solvent, such as alkane, is used as the solvent.

In embodiments of the present invention, the solid media are at least one of inorganic material, carbon-based material, or mixtures thereof. Non-limiting examples of inorganic materials are silica (silicon oxide), alumina (aluminum oxide), activated alumina (activated aluminum oxide), iron oxide, aluminum silicate, magnesium silicate, amorphous volcanic glass, reclaimed glass, silica gel, diatomaceous earth, sand, quartz, perlite, fuller's earth, bentonite, or mixtures thereof. In embodiments of the present invention, the inorganic material is at least one of silica, alumina, iron oxide, aluminum silicate, amorphous volcanic glass, or mixtures thereof. In embodiments of the present invention, the inorganic material comprises diatomaceous earth. In embodiments of the present invention, the inorganic material comprises activated alumina. In embodiments of the present invention, the inorganic material comprises reclaimed glass.

Non-limiting examples of carbon-based materials are anthracite coal, carbon black, coke, activated carbon, cellulose, or mixtures thereof. In embodiments of the present invention, the carbon-based material is at least one of anthracite coal, carbon black, coke, activated carbon, cellulose, or mixtures thereof. In embodiments of the present invention, the carbon-based material comprises activated carbon.

In embodiments of the present invention, the solid media are contacted with the second PE or PP suspension in a mixing vessel for a specified amount of time while the contents of the vessel are mixed. In embodiments of the present invention, the solid media are removed from the mixing vessel via a solid-liquid separation step. Non-limiting examples of solid-liquid separation steps include filtration, decantation, centrifugation, and settling.

In embodiments of the present invention, the second PE or PP suspension is passed through a stationary bed of solid media. In embodiments of the present invention, the solid media are placed in an axial flow filter. In embodiments of the present invention, the solid media are placed in a radial flow filter. A non-limiting example of a radial flow filter is a candle filter. In embodiments of the present invention, the solid media are placed in a candle filter.

In embodiments of the present invention, the height or length of the stationary bed of solid media is greater than about 5 cm. In embodiments of the present invention, the height or length of the stationary bed of solid media is greater than about 10 cm. In embodiments of the present invention, the height or length of the stationary bed of solid media is greater than about 20 cm. In embodiments of the present invention, the solid media are replaced as needed to maintain a desired purity of polyethylene or polypropylene. In embodiments of the present invention, the solid media are regenerated and re-used in the purification step. In embodiments of the present invention, the solid media are regenerated by fluidizing the solid media during a backwashing step.

In embodiments of the present invention, the purification comprises contacting the second PE suspension and second PP suspension with the solid media in a candle filter followed by an axial flow filter, and the solid media of the candle filter comprise diatomaceous earth and the solid media of the axial flow filter comprise activated alumina.

In embodiments of the present invention, a method of separating and purifying a mixed stream of contaminated reclaimed polyethylene (crPE) and contaminated reclaimed polypropylene (crPP) to produce separate streams of purified recycled polyethylene with virgin-like optical properties (vlPE) and purified recycled polypropylene with virgin-like optical properties (vlPP) comprises: (a) Purifying said second PE suspension in a PE purification equipment at a PE purification temperature and a PE purification pressure by contacting said second PE suspension with solid media; wherein said PE purification equipment has a nameplate capacity; wherein said PE purification temperature is from about 100°C to about 260°C; wherein said PE purification pressure is above the PE cloud point pressure corresponding to said PE purification temperature; and wherein a third PE suspension comprising purer PE is produced; and (b) Purifying said second PP suspension in a PP purification equipment at a PP purification temperature and a PP purification pressure by contacting said second PP suspension with solid media; wherein said PP purification equipment has a nameplate capacity; wherein said PP purification temperature is from about 100°C to about 260°C; wherein said PP purification pressure is above the PP cloud point pressure corresponding to said PP purification temperature; and wherein a third PP suspension comprising purer PP is produced.

In embodiments of the present invention, a method of separating and purifying a mixed stream of contaminated reclaimed polyethylene (crPE) and contaminated reclaimed polypropylene (crPP) to produce separate streams of purified recycled polyethylene with virgin-like optical properties (vlPE) and purified recycled polypropylene with virgin-like optical properties (vlPP) comprises: (a) Purifying said second PE suspension in a purification equipment at about 160°C and about 4700 psig (324 barg) by contacting said second PE suspension with solid media; and wherein a third PE suspension comprising purer PE is produced; and (b) Purifying said second PP suspension in said purification equipment at about 115°C and about 1200 psig (83 barg) by contacting said second PP suspension with solid media; and wherein a third PP suspension comprising purer PP is produced.

In embodiments of the present invention, a method of separating and purifying a mixed stream of contaminated reclaimed polyethylene (crPE) and contaminated reclaimed polypropylene (crPP) to produce separate streams of purified recycled polyethylene with virgin-like optical properties (vlPE) and purified recycled polypropylene with virgin-like optical properties (vlPP) comprises: (a) Purifying said second PE suspension in a purification equipment at about 160°C and about 4700 psig (324 barg) by contacting said second PE suspension with solid media; and wherein a third PE suspension comprising purer PE is produced; and (b) Purifying said second PP suspension in said purification equipment at about 115°C and about 1200 psig (83 barg) by contacting said second PP suspension with solid media; and wherein a third PP suspension comprising purer PP is produced.

Typically, the type of PE or PP purification solvent, PE or PP mass concentration in the purification step, PE or PP purification temperature, and PE or PP purification pressure are the same as those in the dissolution step and/or those in the extraction step.

In embodiments of the present invention, the PE pr PP purification mass concentration is at least about 1 wt%. In embodiments of the present invention, the PE or PP purification mass concentration is at least about 2 wt%. In embodiments of the present invention, the PE or PP purification mass concentration is at least about 3 wt%. In embodiments of the present invention, the PE or PP purification mass concentration is at least about 5 wt%. In embodiments of the present invention, the PE or PP purification mass concentration is at least about 10 wt%.

In embodiments of the present invention, the PE dissolution pressure, PE settling pressure, and PE purification pressure are all the same. In embodiments of the present invention, the PP dissolution pressure, PP settling pressure, and PP purification pressure are all the same. In embodiments of the present invention, the PE dissolution pressure, PE settling pressure, and PE purification pressure are all the same, and the PP dissolution pressure, PP settling pressure, and PP purification pressure are all the same.

In embodiments of the present invention, the PE dissolution temperature, PE settling temperature, and PE purification temperature are all the same. In embodiments of the present invention, the PP dissolution temperature, PP settling temperature, and PP purification temperature are all the same. In embodiments of the present invention, the PE dissolution temperature, PE settling temperature, and PE purification temperature are all the same, and the PP dissolution temperature, PP settling temperature, and PP purification temperature are all the same.

In embodiments of the present invention, the PP extraction pressure, the PP dissolution pressure, the PP settling pressure, and the PP purification pressure are all about 1200 psig (83 barg). In embodiments of the present invention, the PE extraction temperature, the PE dissolution temperature, the PE settling temperature, and the PP extraction temperature are all about 160°C.

In embodiments of the present invention, the PE extraction solvent, the PE dissolution solvent, the PP extraction solvent, and the PP dissolution solvent are all n-butane; the PE extraction temperature and the PP extraction temperature are from about 110°C to about 200°C; the PE extraction pressure is from about 1000 psig (69 barg) to about 3500 psig (241 barg); the PE dissolution pressure, the PE settling pressure, and the PE purification pressure are all from about 4000 psig (276 barg) to about 5500 psig (379 barg); the PP extraction pressure is from about 200 psig (14 barg) to about 2000 psig (138 barg); and the PP dissolution pressure, the PP settling pressure, and the PP purification pressure are from about 700 psig (48 barg) to about 3500 psig (241 barg).

In embodiments of the present invention, the PE extraction solvent, the PE dissolution solvent, the PP extraction solvent, and the PP dissolution solvent are all n-butane; the PE extraction temperature, the PE dissolution temperature, the PE settling temperature, and the PE purification temperature are all about 160°C; the PE extraction pressure is about 3000 psig (207 barg); the PE dissolution pressure, the PE settling pressure, and the PE purification pressure are all about 4700 psig (324 psig); the PP extraction temperature is about 160°C; the PP dissolution temperature, the PP settling temperature, and the PP purification temperature are all about 115°C; and the PP extraction pressure, the PP dissolution pressure, the PP settling pressure, and the PP purification pressure are all about 1200 psig (83 barg).

In embodiments of the present invention, the PE extraction solvent, said PE dissolution solvent, said PP extraction solvent, and said PP dissolution solvent are all n-butane; said PE extraction temperature, said PE dissolution temperature, said PE settling temperature, and said PE purification temperature are all about 140°C; said PE extraction pressure is about 2500 psig (172 barg); said PE dissolution pressure, said PE settling pressure, and said PE purification pressure are all about 4300 psig (296 psig); said PP extraction temperature, said PP dissolution temperature, said PP settling temperature, and said PP purification temperature are all about 140°C; said PP extraction pressure is about 900 psig (62 barg); and said PP dissolution pressure, said PP settling pressure, and said PP purification pressure are all about 1800 psig (124 barg).

In embodiments of the present invention, said PE extraction solvent, said PE dissolution solvent, said PP extraction solvent, and said PP dissolution solvent are all n-pentane; said PE extraction temperature and said PP extraction temperature are from about 120°C to about 240°C; said PE extraction pressure is from about 500 psig (34 barg) to about 2800 psig (193 barg); said PE dissolution pressure, said PE settling pressure, and said PE purification pressure are all from about 2000 psig (138 barg) to about 4000 psig (276 barg); said PP extraction pressure is from about 200 psig (14 barg) to about 1500 psig (103 barg); and said PP dissolution pressure, said PP settling pressure, and said PP purification pressure are from about 700 psig (48 barg) to about 2800 psig (193 barg).

In embodiments of the present invention, said PE extraction temperature, said PE dissolution temperature, said PE settling temperature, and said PE purification temperature are all about 220°C; said PE extraction pressure is about 2200 psig (152 barg); said PE dissolution pressure, said PE settling pressure, and said PE purification pressure are all about 3800 psig (262 barg); said PP extraction temperature is about 220°C; said PP extraction pressure is from about 200 psig (14 barg) to about 1500 psig (103 barg); and said PP dissolution pressure, said PP settling pressure, and said PP purification pressure are all about 900 psig (62 barg).

In embodiments of the present invention, said PE extraction temperature is about 205°C; said PE dissolution temperature, said PE settling temperature, and said PE purification temperature are all about 140°C; said PE extraction pressure, said PE dissolution pressure, said PE settling pressure, and said PE purification pressure are all about 1900 psig (131 barg); said PP extraction temperature is about 205°C; said PP dissolution temperature, said PP settling temperature, and said PP purification temperature are all about 140°C; and said PP extraction pressure, said PP dissolution pressure, said PP settling pressure, and said PP purification pressure are all about 900 psig (62 barg).

### IX. Swing Plant - Solvent Separation

The PE or PP purification solvent can be partially or completely converted from the liquid to the vapor phase by controlling the PE or PP separation temperature and separation pressure. In embodiments of the present invention, the separation of the purer PE or PP from the solvent is accomplished without completely converting the solvent into a 100% vapor by controlling the separation temperature and separation pressure of the solvent during the separation step.

The separation of the purer PE or PP from the solvent can be accomplished by any method of liquid-liquid or liquid-solid separation. Non-limiting examples of liquid-liquid or liquid-solid separations include filtration, decantation, centrifugation, and settling.

In embodiments of the present invention, a method of separating and purifying a mixed stream of contaminated reclaimed polyethylene (crPE) and contaminated reclaimed polypropylene (crPP) to produce separate streams of purified recycled polyethylene with virgin-like optical properties (vlPE) and purified recycled polypropylene with virgin-like optical properties (vlPP) comprises: (a) Separating said PE dissolution solvent from said third PE suspension in a PE solvent separation equipment to produce said vlPE; and (b) Separating said PP dissolution solvent from said third PP suspension in a PP solvent separation equipment to produce said vlPP.

In embodiments of the present invention, a method of separating and purifying a mixed stream of contaminated reclaimed polyethylene (crPE) and contaminated reclaimed polypropylene (crPP) to produce separate streams of purified recycled polyethylene with virgin-like optical properties (vlPE) and purified recycled polypropylene with virgin-like optical properties (vlPP) comprises: (a) Separating n-butane from said third PE suspension in a solvent separation equipment to produce said vlPE; and (b) Separating n-butane from said third PP suspension in said solvent separation equipment to produce said vlPP.

In embodiments of the present invention, a method of separating and purifying a mixed stream of contaminated reclaimed polyethylene (crPE) and contaminated reclaimed polypropylene (crPP) to produce separate streams of purified recycled polyethylene with virgin-like optical properties (vlPE) and purified recycled polypropylene with virgin-like optical properties (vlPP) comprises: (a) Separating n-pentane from said third PE suspension in a solvent separation equipment to produce said vlPE; and (b) Separating n-pentane from said third PP suspension in said solvent separation equipment to produce said vlPP.

In embodiments of the present invention, the separation of the purer PE or PP from the third PE or PP suspension takes place at a PE or PP separation temperature and at a PE or PP separation pressure; and wherein the PE or PP precipitates from solution and is no longer dissolved in the solvent. In embodiments of the present invention, the separation of the purer PE or PP from the solvent is accomplished by reducing the PE or PP separation pressure at a fixed PE or PP separation temperature. In embodiments of the present invention, the separation of the purer PE or PP from the solvent is accomplished by reducing the PE or PP separation temperature at a fixed PE or PP separation pressure. In embodiments of the present invention, the separation of the purer PE or PP from the solvent is accomplished by increasing the PE or PP separation temperature at a fixed PE or PP separation pressure. In embodiments of the present invention, the separation of the purer PE or PP from the solvent is accomplished by reducing both the PE or PP separation temperature and PE or PP separation pressure.

In embodiments of the present invention, the purer PE or PP, which may be sourced from PCR PE or PCR PP, is essentially contaminant-free, pigment-free, odor-free, homogenous, and similar in properties to virgin PE (vPE) or virgin PP (vPP). In embodiments of the present invention, the physical properties of the solvent may enable more energy efficient methods for separation of the solvent from the purer PE or PP.

In embodiments of the present invention, the purer PE has virgin-like optical properties (vlPE). In embodiments of the present invention, the purer PP has virgin-like optical properties (vlPP). In embodiments of the present invention, the vlPE and the vlPP have L* greater than about 82, a* greater than about - 3, b* less than about 5, and Y less than about 50%.

The stream of purified recycled polyethylene with virgin-like optical properties (vlPE) is essentially free of any polymeric (other than PE) contamination. Non limiting examples of polymeric contamination in vlPE are PP, PET, Nylon, etc. More specifically, the vlPE stream has maximum PP concentration corresponding to a heat of fusion (ΔH_{f}, measured under typical Differential Scanning Calorimetry (DSC) in the 2^{nd} heat mode) of 1 J/g or less.

The stream of purified recycled polypropylene with virgin-like optical properties (vlPP) is essentially free of any polymeric (other than PP) contamination. Non limiting examples of polymeric contamination in vlPP are PE, PET, Nylon, etc. More specifically, the vlPP stream has maximum PE concentration corresponding to ΔH_{f} of 10 J/g or less.

In embodiments of the present invention, a method for purifying crPE or crPP to produce vlPE or vlPP comprises de-inking of said crPE or crPP. A non-limiting example of a de-inking process is described in U.S. Patent No. 9,616,595, which discloses an ink removal step with the use of an aqueous cleaning fluid with high pH and selective cleaning agents, such as dodecyl sulfate, and high turbulence.

In embodiments of the present invention, a method of separating and purifying a mixed stream of contaminated reclaimed polyethylene (crPE) and contaminated reclaimed polypropylene (crPP) to produce separate streams of purified recycled polyethylene with virgin-like optical properties (vlPE) and purified recycled polypropylene with virgin-like optical properties (vlPP) comprises: (a) Extracting said mixed stream of crPE and crPP with a polyethylene (PE) extraction solvent in a PE extractor at a PE extraction temperature, a PE extraction pressure, and a PE extraction mass ratio of said PE extraction solvent to said mixed stream of crPE and crPP to produce a PE light stream and a PE heavy stream; wherein said PE extractor has a nameplate capacity; wherein said crPE forms two phases and said crPP forms one phase in said PE extraction solvent and in said PE extractor; wherein said PE extraction temperature is from about 100°C to about 260°C; wherein said PE extraction pressure is between the cloud point pressure of PE and the cloud point pressure of polypropylene (PP) corresponding to said PE extraction temperature; wherein said PE light stream comprises said crPP, a low molecular weight fraction of crPE (which is soluble in said PE extraction solvent in said PE extractor), and the extractable contamination of said crPE; and wherein said PE heavy stream comprises said crPE minus said low molecular weight fraction of crPE; (b) Dissolving said PE heavy stream in a PE dissolution solvent and in a PE dissolution equipment at a PE dissolution temperature, a PE dissolution pressure, and a PE dissolution mass concentration of at least about 1 wt%; wherein said PE dissolution equipment has a nameplate capacity; wherein said PE dissolution temperature is from about 100°C to about 260°C; wherein said PE dissolution pressure is above the PE cloud point pressure corresponding to said PE dissolution temperature; and wherein a first PE suspension comprising dissolved PE and suspended particulate contaminants is produced; (c) Purifying said second PE suspension in a PE purification equipment at a PE purification temperature and a PE purification pressure by contacting said second PE suspension with solid media; wherein said PE purification equipment has a nameplate capacity; wherein said PE purification temperature is from about 100°C to about 260°C; wherein said PE purification pressure is above the PE cloud point pressure corresponding to said PE purification temperature; and wherein a third PE suspension comprising purer PE is produced; (d) Separating said PE dissolution solvent from said third PE suspension in a PE solvent separation equipment to produce said vlPE; (e) Extracting said PE light stream with a PP extraction solvent in a PP extractor at a PP extraction temperature, a PP extraction pressure, and a PP extraction mass ratio of said PP extraction solvent to said PE light stream to produce a PP light stream and a PP heavy stream; wherein said PP extractor has a nameplate capacity; wherein said crPP forms two phases and said low molecular weight fraction of crPE forms two phases in said PP extraction solvent and in said PP extractor; wherein said PP extraction temperature is from about 100°C to about 260°C; wherein said PP extraction pressure is below the PP cloud point pressure corresponding to said PP extraction temperature; wherein said PP light stream comprises said low molecular weight fraction of crPE, a low molecular weight fraction of crPP (which are soluble in said PP extraction solvent in said PP extractor), and the extractable contamination of said crPP; and wherein said PP heavy stream comprises all of crPP minus said low molecular weight fraction of crPP; (f) Dissolving said PP heavy stream in a PP dissolution solvent and a PP dissolution equipment at a PP dissolution temperature, a PP dissolution pressure, and a PP dissolution mass concentration of at least about 1 wt%; wherein said PP dissolution equipment has a nameplate capacity; wherein said PP dissolution temperature is from about 100°C to about 260°C; wherein said PP dissolution pressure is above the PP cloud point pressure corresponding to said PP dissolution temperature; and wherein a first PP suspension comprising dissolved PP and suspended particulate contaminants is produced; (g) Settling said first PP suspension in a PP settling equipment at a PP settling temperature and a PP settling pressure; wherein said PP settling equipment has a nameplate capacity; wherein said PP settling temperature is from about 100°C to about 260°C; wherein said PP settling pressure is above the PP cloud point pressure corresponding to said PP settling temperature; and wherein a second PP suspension comprising dissolved PP and suspended remaining particulate contaminants is produced; (h) Purifying said second PP suspension in a PP purification equipment at a PP purification temperature and a PP purification pressure by contacting said second PP suspension with solid media; wherein said PP purification equipment has a nameplate capacity; wherein said PP purification temperature is from about 100°C to about 260°C; wherein said PP purification pressure is above the PP cloud point pressure corresponding to said PP purification temperature; and wherein a third PP suspension comprising purer PP is produced; and (i) Separating said PP dissolution solvent from said third PP suspension in a PP solvent separation equipment to produce said vlPP.

### X. EXAMPLES

### EXAMPLE 1 - Method of purifying HDPE JF, containing a relatively small amount of PP, with n-butane and one extraction step

30 g of HDPE Jazz Flake (HDPE JF; post-consumer recycled HDPE "mixed color" flake; used to produce the TPS-8000 product; TABB Packaging Solutions, LLC; Canton, MI) were loaded into a 300 mL autoclave equipped with a mechanical stirrer. HDPE JF also contained a certain amount of PP, as measured by DSC and reported below. The test in this EXAMPLE 1 was conducted at Phasex Corporation, 125 Flagship Drive, North Andover, MA. The air from the autoclave headspace was removed with three repeat cycles of vacuuming and N₂ purging, and then the autoclave was then filled with n-butane and equilibrated at about 160°C and about 3000 psig (207 barg). At those conditions, the material in the autoclave is in a two-phase regime, i.e., PE light stream that comprises the PP and a low molecular weight PE fraction, and the PE heavy phase that comprises the PE minus the low molecular weight PE fraction. The extraction step was conducted at about 160°C and about 3000 psig (207 barg) in one step after stirring for 10 min and settling for another 10 min. About 7.2 wt% of the HDPE JF was extracted. The material collected in this extraction step was labeled "PEC4-11 F1". The remaining HDPE JF in the autoclave was then dissolved in the n-butane at the dissolution conditions of about 160°C and about 4700 psig (324 barg). The solution was stirred for about 60 min, allowed to settle for another 60 min, removed from the autoclave by opening the autoclave valve, passed through an axial flow filter with diatomaceous earth (DE), activated alumina column, and expansion valve, and got collected into the product collection flask. The DE axial flow filter contained about 1 in. (2.54 cm) of DE (Celatom^{®} FW-80; EP Minerals, LLC; Reno, NV), and the activated alumina column had about 0.68 in. (1.73 cm) ID and about 30 in. (76.2 cm) length, and it was charged with about 120 g of spherical activated alumina particles 1/16 in. (1.59 mm), 7 x 14 mesh (1.41 mm - 2.83 mm; Catalog #: 87014; Sorbent Technologies, Inc.; Norcross, GA). The product fractions were labelled sequentially "PEC4-11 F2A", "PEC4-11 F2B", and "PEC4-11 F2C". After all samples were collected, the autoclave was equilibrated to atmospheric pressure and room temperature. All residual material in the autoclave was then collected as a residuum sample.

The product fractions were compression molded into 1-mm thick and 30 x 30 mm windows (following the principles of ASTM D4703-16 "Standard Practice for Compression Molding Thermoplastic Materials into Test Specimens, Plaques, or Sheets"). The temperature used for the compression molding was about 160°C, the pressure was about 1.8 metric tons, and Teflon sheets were used as release liners. The optical properties of these windows were then measured (following the principles of ASTM E308 "Standard Practice for Computing the Colors of Objects by Using the CIE System") using the LabScan XE (Hunter Associates Laboratory, Inc.; Reston, VA) and D65/10 conditions, i.e., D65 light source and 10-degree observer angle. The results were: L* = 85.4 ± 0.1; a* = - 2.0 ± 0.1; b* = 3.3 ± 0.4; and Y (opacity) = 41.5% ± 0.3%. For comparison, a typical blow-molding virgin HDPE (Formolene^{®} HB5502F; Formosa Plastics Corp.; Livingston, NJ) has the following optical values: L* = 85.9 ± 0.1; a* = - 1.3 ± 0.0; b* = -0.3 ± 0.0; and Y (opacity) = 41.3% ± 0.6%. Also, the HDPE JF, which was fed into EXAMPLE 1, in pellet form, had the following optical properties: L* = 64.6 ± 3.6; a* = 16 ± 13; b* = 16.8 ± 6.4; and Y (opacity) = 100%.

Samples of the HDPE JF feed material and the fractions PEC4-11 F1, PEC4-11 F2B, and PEC4-11 F2C were analyzed using a standard Differential Scanning Calorimetry technique (in the 2^{nd} heat mode) and the peak melting temperatures and ΔH_{f}'s of the PE and PP materials present in those fractions were reported (TABLE). Note that the typically reported ΔH_{f}'s of 100% crystalline HDPE and PP in the literature are 293 J/g and 207 J/g, respectively. HDPE JF contained a relatively small amount of PP, as its DSC thermogram showed a peak at melting temperature of 163°C and ΔH_{f} of 5.9 J/g. The extraction fraction PEC4-11 F1 showed a similar peak at 160°C and ΔH_{f} of 13 J/g. On the other hand, the product fractions PEC4-11 F2B and F2C contained virtually no PP, as their respective ΔH_{f}'s were 0.4 and 0.8 J/g. It is clear from this EXAMPLE 1 that the method was able to remove the PP, that was present in the feed material HDPE JF, and place it to the extracted material, thus allowing vlPE to be produced without PP content.

### EXAMPLE 2 - Method of purifying HDPE JF, containing a relatively small amount of PP, with n-butane and two extraction steps

The experiment described in EXAMPLE 1 was repeated, but two extraction steps were conducted to simulate a liquid-liquid extraction column with two or more stages. The material collected in these extraction steps were labeled "PEC4-14 F1a" and "PEC4-14 F1b", and one of the product fractions was labelled "PEC4-14 F2A". The optical properties of the product fraction PEC4-14 F2A were measured as: L* = 88.3 ± 0.5; a* = - 1.8 ± 0.1; b* = 0.8 ± 0.4; and Y (opacity) = 48.8% ± 1.0%. The extraction fractions PEC4-14 F1a and PEC4-14 F1b showed PP peaks at 163°C and 161°C, respectively, and ΔH_{f}'s of 21.1 J/g and 9.8 J/g, respectively. On the other hand, the product fraction PEC4-14 F2A contained virtually no PP, as its ΔH_{f} was 0.8 J/g. Similar to EXAMPLE 1, it is clear from this EXAMPLE 2 that the method was able to remove the PP, that was present in the feed material HDPE JF, and place it to the extracted material, thus allowing vlPE to be produced without PP content.

### EXAMPLE 3 - Method of purifying HDPE JF, containing a relatively small amount of PP, with n-pentane and five extraction steps

75 g of HDPE JF were loaded into a 7.695 L (working volume) autoclave (Model 4552M; Parr Instrument Company; Moline, IL) equipped with an overhead mechanical stirrer. The air from the autoclave headspace was removed with three repeat cycles of vacuuming and N₂ purging. The autoclave was then filled with n-pentane and its contents were equilibrated at an internal temperature of about 205°C and pressure of about 1900 psig (131 barg), i.e., extraction conditions. At those conditions, the material in the autoclave is in a two-phase regime, i.e., PE light stream that comprises the PP and a low molecular weight PE fraction, and the PE heavy phase that comprises the PE minus the low molecular weight PE fraction. The autoclave material was then extracted five times using the following procedure: the autoclave material was stirred for about 10 min at about 680 rpms, then it was allowed to settle for about 10 min, and finally one vessel volume of hexanes was flushed through the autoclave into the extract collection flask through an expansion valve. The above extraction procedure was repeated four more times. The material collected from all five extraction cycles was labeled "7LPE-30 F1a", "7LPE-30 F1b", "7LPE-30 F1c", "7LPE-30 F1d", and "7LPE-30 F1e". The remaining autoclave material was then dissolved in n-pentane at the dissolution conditions of about 140°C and about 1900 psig (131 barg), thus creating a one-phase system. The dissolved material was purified and collected using the following procedure: the autoclave material was stirred for about 60 min at about 680 rpms, then it was allowed to settle for about 60 min, then the autoclave material was removed from the autoclave by opening the autoclave valve and allowing it to pass through a candle filter, an activated alumina column, an expansion valve, and get collected into the product collection flask. The candle filter (FUNDABAC^{®} Filter High pressure TSD with filter volume about 1 L; Dr Mueller AG, Maennedorf, Switzerland) had a stainless-steel sock/hose (about 5.5 in. (14 cm) long) coated with about 18 g of diatomaceous earth (Celatom^{®} FW-40; EP Minerals, LLC; Reno, NV). The activated alumina column had about 0.68 in. (1.73 cm) ID and about 30 in. (76.2 cm) length, and it was charged with about 120 g of spherical activated alumina particles 1/16 in. (1.59 mm), 7 x 14 mesh (1.41 mm - 2.83 mm; Catalog #: 87014; Sorbent Technologies, Inc.; Norcross, GA). The product fractions were labelled as "7LPE-30 F2", "7LPE-30 F3", and "7LPE-30 F4". Fractions were collected until a low solubility was noticed / calculated. After all samples were collected, the autoclave was equilibrated to atmospheric pressure and room temperature. All residual material in the autoclave was then collected as a residuum sample.

Samples from the product fractions were used to produce windows for measuring their optical properties, as it was done in EXAMPLE 1. The results were: L* = 83.8 ± 0.6; a* = - 2.4 ± 0.3; b* = 3.5 ± 0.4; and Y (opacity) = 34.0% ± 4.7%. Samples from the extraction and product fractions were also analyzed using DSC as described in EXAMPLE 1 and the results are shown in TABLE 1. The extraction samples showed the presence of PP with ΔH_{f} from N.D. (not detected) to 3.1 J/g, whereas the product fraction showed virtually no PP. Similar to EXAMPLES 1 and 2, it is clear from this EXAMPLE 3 that the method was able to remove the PP, that was present in the feed material HDPE JF, and place it to the extracted material, thus allowing vlPE to be produced without PP content.

### EXAMPLE 4 - Method of purifying a mixed stream of HDPE JF and PP JF with n-butane

30 g of a mixed stream of HDPE JF and PP Jazz Flake (PP JF) (i.e., 21 g of HDPE JF and 9 g of PP JF) were loaded into the autoclave used in EXAMPLE 1. The procedure followed involved 2 legs with n-butane: 1) PEC4-23: 2 PE extractions at about 160°C and about 3000 psig (207 barg), and PE dissolution at about 160°C and about 4700 psig (324 barg) to produce PEC4-23 F2A; and 2) PEC4-23A: loading the extraction fractions from PEC4-23 back into the autoclave and run 2 PP extractions at about 160°C and about 1200 psig (83 barg), and PP dissolution at about 115°C and about 1200 psig (83 barg) to produce PEC4-23 F2/3.

The optical results for PEC4-23 F2A (product vlPE) were: L* = 86.6 ± 0.2, a* = - 1.5 ± 0.0, b* = 0.2 ± 0.1, and Y = 45.5% ± 3.7%; and for PEC4-23A F2/3 (product vlPP) were: L* = 83.9, a* = - 1.0, b* = 3.9, and Y = 16.8%. The product fraction PEC4-23 F2A contained PE but no PP, since it only showed a DSC PE peak at 132°C and ΔH_{f} of 169.6 J/g, and no PP peak. The extraction fractions PEC4-23A F1A and F1B contained both PE and PP, and the product fraction PEC4-23A F2/3 contained PP and a smaller amount of PE. It is clear from this EXAMPLE 4 that the method allowed for the production of vlPE (e.g. PEC4-23 F2A) and then vlPP (e.g. PEC4-23A F2/3).

**TABLE**

| EXAMPLE | PE Peak T, [°C] | PE ΔH_{f}, [J/g] | PP Peak T, [°C] | PP ΔH_{f}, [J/g] |
|---|---|---|---|---|
| HDPE JF | 130 | 148.9 | 163 | 5.9 |
| | | | | |
| EX. 1 / PEC4-11 F1 (nC4; Extraction) | 128 | 172.2 | 160 | 13 |
| EX. 1 / PEC4-11 F2B (nC4; Dissolution) | 132 | 187.9 | 164 | 0.4 |
| EX. 1 / PEC4-11 F2C (nC4; Dissolution) | 131 | 188.9 | 164 | 0.8 |
| | | | | |
| EX. 2 / PEC4-14 F1a (nC4; Extraction) | 128 | 121.6 | 163 | 21.1 |
| EX. 2 / PEC4-14 F1b (nC4; Extraction) | 128 | 173.4 | 161 | 9.8 |
| EX. 2 / PEC4-14 F2B (nC4; Dissolution) | 132 | 177.7 | 166 | 0.8 |
| | | | | |
| EX. 3 / 7LPE-30 F1a (nC5; Extraction) | 133 | 183.7 | 161 | 1.3 |
| EX. 3 / 7LPE-30 F1b (nC5; Extraction) | 129 | 174.8 | 155 | 3.1 |
| EX. 3 / 7LPE-30 F1c (nC5; Extraction) | 132 | 192.1 | 162 | 0.3 |
| EX. 3 / 7LPE-30 F1d (nC5; Extraction) | 130 | 189.2 | N.D. | N.D. |
| EX. 3 / 7LPE-30 F1e (nC5; Extraction) | 130 | 196.8 | 160 | 0.6 |
| EX. 3 / 7LPE-30 F2 (nC5; Dissolution) | 134 | 142.5 | N.D. | N.D. |
| EX. 3 / 7LPE-30 F3 (nC5; Dissolution) | 135 | 145.4 | N.D. | N.D. |
| EX. 3 / 7LPE-30 F4 (nC5; Dissolution) | 134 | 145.6 | N.D. | N.D. |
| | | | | |
| EX. 4 / PEC4-23 F2A (nC4; Dissolution) | 132 | 169.6 | N.D. | N.D. |
| EX. 4 / PEC4-23A F1a (nC4; Extraction) | 123 | 40.1 | 160 | 42.1 |
| EX. 4 / PEC4-23A F1b (nC4; Extraction) | 125 | 60.7 | 158 | 51.3 |
| EX. 4 / PEC4-23A F2/3 (nC4; Dissolution) | 125 | 9.6 | 163 | 75.6 |

The foregoing description is given for clearness of understanding only, and no unnecessary limitations should be understood therefrom, as modifications within the scope of the invention may be apparent to those having ordinary skill in the art.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A method of separating and purifying a mixed stream of contaminated reclaimed polyethylene (crPE) and contaminated reclaimed polypropylene (crPP) to produce separate streams of purified recycled polyethylene with virgin-like optical properties (vIPE) and purified recycled polypropylene with virgin-like optical properties (vIPP) comprising:
a. Extracting said mixed stream of crPE and crPP with a polyethylene (PE) extraction solvent in a PE extractor at a PE extraction temperature, a PE extraction pressure, and a PE extraction mass ratio of said PE extraction solvent to said mixed stream of crPE and crPP to produce a PE light stream and a PE heavy stream, wherein said PE extractor has a nameplate capacity; wherein said crPE forms two phases and said crPP forms one phase in said PE extraction solvent and in said PE extractor; wherein said PE extraction temperature is from about 100°C to about 260°C; wherein said PE extraction pressure is between the cloud point pressure of PE and the cloud point pressure of polypropylene (PP) corresponding to said PE extraction temperature; wherein said PE light stream comprises said crPP, a low molecular weight fraction of crPE (which is soluble in said PE extraction solvent in said PE extractor), and the extractable contamination of said crPE; and wherein said PE heavy stream comprises said crPE minus said low molecular weight fraction of crPE;
b. Dissolving said PE heavy stream in a PE dissolution solvent and in a PE dissolution equipment at a PE dissolution temperature, a PE dissolution pressure, and a PE dissolution mass concentration of at least about 1 wt%; wherein said PE dissolution equipment has a nameplate capacity; wherein said PE dissolution temperature is from about 100°C to about 260°C; wherein said PE dissolution pressure is above the PE cloud point pressure corresponding to said PE dissolution temperature; and wherein a first PE suspension comprising dissolved PE and suspended particulate contaminants is produced;
c. Settling said first PE suspension in a PE settling equipment at a PE settling temperature and a PE settling pressure; wherein said PE settling equipment has a nameplate capacity; wherein said PE settling temperature is from about 100°C to about 260°C; wherein said PE settling pressure is above the PE cloud point pressure corresponding to said PE settling temperature; and wherein a second PE suspension comprising dissolved PE and suspended remaining particulate contaminants is produced;
d. Purifying said second PE suspension in a PE purification equipment at a PE purification temperature and a PE purification pressure by contacting said second PE suspension with solid media; wherein said PE purification equipment has a nameplate capacity; wherein said PE purification temperature is from about 100°C to about 260°C; wherein said PE purification pressure is above the PE cloud point pressure corresponding to said PE purification temperature; and wherein a third PE suspension comprising purer PE is produced;
e. Separating said PE dissolution solvent from said third PE suspension in a PE solvent separation equipment to produce said vIPE;
f. Extracting said PE light stream with a PP extraction solvent in a PP extractor at a PP extraction temperature, a PP extraction pressure, and a PP extraction mass ratio of said PP extraction solvent to said PE light stream to produce a PP light stream and a PP heavy stream; wherein said PP extractor has a nameplate capacity; wherein said crPP forms two phases and said low molecular weight fraction of crPE forms two phases in said PP extraction solvent and in said PP extractor; wherein said PP extraction temperature is from about 100°C to about 260°C; wherein said PP extraction pressure is below the PP cloud point pressure corresponding to said PP extraction temperature; wherein said PP light stream comprises said low molecular weight fraction of crPE, a low molecular weight fraction of crPP (which are soluble in said PP extraction solvent in said PP extractor), and the extractable contamination of said crPP; and wherein said PP heavy stream comprises all of crPP minus said low molecular weight fraction of crPP;
g. Dissolving said PP heavy stream in a PP dissolution solvent and a PP dissolution equipment at a PP dissolution temperature, a PP dissolution pressure, and a PP dissolution mass concentration of at least about 1 wt%; wherein said PP dissolution equipment has a nameplate capacity; wherein said PP dissolution temperature is from about 100°C to about 260°C; wherein said PP dissolution pressure is above the PP cloud point pressure corresponding to said PP dissolution temperature; and wherein a first PP suspension comprising dissolved PP and suspended particulate contaminants is produced;
h. Settling said first PP suspension in a PP settling equipment at a PP settling temperature and a PP settling pressure; wherein said PP settling equipment has a nameplate capacity; wherein said PP settling temperature is from about 100°C to about 260°C; wherein said PP settling pressure is above the PP cloud point pressure corresponding to said PP settling temperature; and wherein a second PP suspension comprising dissolved PP and suspended remaining particulate contaminants is produced;
i. Purifying said second PP suspension in a PP purification equipment at a PP purification temperature and a PP purification pressure by contacting said second PP suspension with solid media; wherein said PP purification equipment has a nameplate capacity; wherein said PP purification temperature is from about 100°C to about 260°C; wherein said PP purification pressure is above the PP cloud point pressure corresponding to said PP purification temperature; and wherein a third PP suspension comprising purer PP is produced; and
j. Separating said PP dissolution solvent from said third PP suspension in a PP solvent separation equipment to produce said vIPP, and
wherein said PE dissolution pressure, said PE settling pressure, and said PE purification pressure are all the same; and wherein said PP dissolution pressure, said PP settling pressure, and said PP purification pressure are all the same;
and said PE dissolution temperature, said PE settling temperature, and said PE purification temperature are all the same; and wherein said PP dissolution temperature, said PP settling temperature, and said PP purification temperature are all the same.

2. The method according to Claim 1, wherein said crPE is at least one of post-consumer recycled (PCR) polyethylene, post-industrial recycled (PIR) polyethylene, or mixtures thereof; and wherein said crPP is at least one of post-consumer recycled (PCR) polypropylene, post-industrial recycled (PIR) polypropylene, or mixtures thereof.

3. The method according to Claim 1 or 2, wherein said vlPE is produced in parallel with said vIPP.

4. The method according to Claim 1 or 2, wherein said vlPE is produced first and said vlPP is produced next; wherein said PE light stream is collected during the production of said vIPE; wherein said PE light stream is then fed into said PP extractor; wherein said PP extractor is the same as said PE extractor; wherein said PP dissolution equipment is the same as said PE dissolution equipment; wherein said PP settling equipment is the same as said PE settling equipment; wherein said PP purification equipment is the same as said PE purification equipment; and wherein said PP solvent separation equipment is the same as said PE solvent separation equipment.

5. The method according to any of Claims 1 to 4, wherein said PE extraction solvent, said PE dissolution solvent, said PP extraction solvent, and said PP dissolution solvent are all n-butane; wherein said PE extraction temperature and said PP extraction temperature are from about 110°C to about 200°C; wherein said PE extraction pressure is from about 1000 psig (69 bar) to about 3500 psig (241 bar); wherein said PE dissolution pressure, said PE settling pressure, and said PE purification pressure are all from about 4000 psig (276 bar) to about 5500 psig (379 bar); wherein said PP extraction pressure is from about 200 psig (14 bar) to about 2000 psig (138 bar); and wherein said PP dissolution pressure, said PP settling pressure, and said PP purification pressure are from about 700 psig (48 bar) to about 3500 psig (241 bar).

6. The method according to Claim 5, wherein said PE extraction temperature, said PE dissolution temperature, said PE settling temperature, said PE purification temperature, and said PP extraction temperature are all about 160°C.

7. The method according to Claim 6, wherein said PP extraction pressure, said PP dissolution pressure, said PP settling pressure, and said PP purification pressure are all about 1200 psig (83 bar).

8. The method according to Claim 5, wherein said PE extraction solvent, said PE dissolution solvent, said PP extraction solvent, and said PP dissolution solvent are all n-butane; wherein said PE extraction temperature, said PE dissolution temperature, said PE settling temperature, and said PE purification temperature are all about 160°C; wherein said PE extraction pressure is about 3000 psig (207 bar); wherein said PE dissolution pressure, said PE settling pressure, and said PE purification pressure are all about 4700 psig (324 psi); wherein said PP extraction temperature is about 160°C; wherein said PP dissolution temperature, said PP settling temperature, and said PP purification temperature are all about 115°C; and wherein said PP extraction pressure, said PP dissolution pressure, said PP settling pressure, and said PP purification pressure are all about 1200 psig (83 bar).

9. The method according to Claim 5, wherein said PE extraction solvent, said PE dissolution solvent, said PP extraction solvent, and said PP dissolution solvent are all n-butane; wherein said PE extraction temperature, said PE dissolution temperature, said PE settling temperature, and said PE purification temperature are all about 140°C; wherein said PE extraction pressure is about 2500 psig (172 bar); wherein said PE dissolution pressure, said PE settling pressure, and said PE purification pressure are all about 4300 psig (296 bar); wherein said PP extraction temperature, said PP dissolution temperature, said PP settling temperature, and said PP purification temperature are all about 140°C; wherein said PP extraction pressure is about 900 psig (62 bar); and wherein said PP dissolution pressure, said PP settling pressure, and said PP purification pressure are all about 1800 psig (124 bar).

10. The method according to any of Claims 1 to 4, wherein said PE extraction solvent, said PE dissolution solvent, said PP extraction solvent, and said PP dissolution solvent are all n-pentane; wherein said PE extraction temperature and said PP extraction temperature are from about 120°C to about 240°C; wherein said PE extraction pressure is from about 500 psig (34 bar) to about 2800 psig (193 bar); wherein said PE dissolution pressure, said PE settling pressure, and said PE purification pressure are all from about 2000 psig (138 bar) to about 4000 psig (276 bar); wherein said PP extraction pressure is from about 200 psig (14 bar) to about 1500 psig (103 bar); and wherein said PP dissolution pressure, said PP settling pressure, and said PP purification pressure are from about 700 psig (48 bar) to about 2800 psig (193 bar).

11. The method according to Claim 10, wherein said PE extraction temperature, said PE dissolution temperature, said PE settling temperature, and said PE purification temperature are all about 220°C; wherein said PE extraction pressure is about 2200 psig (152 bar); wherein said PE dissolution pressure, said PE settling pressure, and said PE purification pressure are all about 3800 psig (262 bar); wherein said PP extraction temperature is about 220°C; wherein said PP extraction pressure is from about 200 psig (14 bar) to about 1500 psig (103 bar); and wherein said PP dissolution pressure, said PP settling pressure, and said PP purification pressure are all about 900 psig (62 bar).

12. The method according to Claim 11, wherein said PE extraction temperature is about 205°C; wherein said PE dissolution temperature, said PE settling temperature, and said PE purification temperature are all about 140°C; wherein said PE extraction pressure, said PE dissolution pressure, said PE settling pressure, and said PE purification pressure are all about 1900 psig (131 bar); wherein said PP extraction temperature is about 205°C; wherein said PP dissolution temperature, said PP settling temperature, and said PP purification temperature are all about 140°C; and wherein said PP extraction pressure, said PP dissolution pressure, said PP settling pressure, and said PP purification pressure are all about 900 psig (62 bar).

13. The method according to any of the previous Claims, wherein said solid media are at least one of inorganic material, carbon-based material, or mixtures thereof.

## Patentansprüche

1. Verfahren zum Trennen und Reinigen eines gemischten Stroms aus kontaminiertem wiedergewonnenem Polyethylen (crPE) und kontaminiertem wiedergewonnenem Polypropylen (crPP), um separate Ströme aus gereinigtem zurückgeführtem Polyethylen mit jungfräulichen optischen Eigenschaften (vlPE) und gereinigtem zurückgeführtem Polypropylen mit jungfräulichen optischen Eigenschaften (vlPP) zu produzieren, umfassend:
a. Extrahieren des gemischten Stroms aus crPE und crPP mit einem Polyethylen-Extraktionslösungsmittel (PE-Extraktionslösungsmittel) in einem PE-Extraktor bei einer PE-Extraktionstemperatur, einem PE-Extraktionsdruck und einem PE-Extraktionsmassenverhältnis des PE-Extraktionslösungsmittels zu dem gemischten Strom aus crPE und crPP, um einen PE-Leichtstrom und einen PE-Schwerstrom zu produzieren; wobei der PE-Extraktor eine Nennleistung aufweist; wobei das crPE zwei Phasen ausbildet und das crPP eine Phase in dem PE-Extraktionslösungsmittel und in dem PE-Extraktor ausbildet; wobei die PE-Extraktionstemperatur von etwa 100 °C bis etwa 260 °C beträgt; wobei der PE-Extraktionsdruck zwischen dem Trübungspunktdruck von PE und dem Trübungspunktdruck von Polypropylen (PP) liegt, der der PE-Extraktionstemperatur entspricht; wobei der PE-Leichtstrom das crPP, eine niedermolekulare Fraktion von crPE (die in dem PE-Extraktionslösungsmittel in dem PE-Extraktor löslich ist) und die extrahierbare Kontamination des crPE umfasst; und wobei der PE-Schwerstrom das crPE minus die niedermolekulare Fraktion von crPE umfasst;
b. Auflösen des PE-Schwerstroms in einem PE-Auflösungslösungsmittel und in einer PE-Auflösungsausrüstung bei einer PE-Auflösungstemperatur, einem PE-Auflösungsdruck und einer PE-Auflösungsmassenkonzentration von mindestens etwa 1 Gew.-%; wobei die PE-Auflösungsausrüstung eine Nennleistung aufweist; wobei die PE-Auflösungstemperatur von etwa 100 °C bis etwa 260 °C beträgt; wobei der PE-Auflösungsdruck über dem PE-Trübungspunktdruck liegt, der der PE-Auflösungstemperatur entspricht; und wobei eine erste PE-Suspension, umfassend aufgelöstes PE und suspendierte teilchenförmige Kontaminanten, produziert wird;
c. Absetzen der ersten PE-Suspension in einer PE-Absetzausrüstung bei einer PE-Absetztemperatur und einem PE-Absetzdruck; wobei die PE-Absetzausrüstung eine Nennleistung aufweist; wobei die PE-Absetztemperatur von etwa 100 °C bis etwa 260 °C beträgt; wobei der PE-Absetzdruck über dem PE-Trübungspunktdruck liegt, der der PE-Absetztemperatur entspricht; und wobei eine zweite PE-Suspension, umfassend aufgelöstes PE und suspendierte verbleibende teilchenförmige Kontaminanten, produziert wird;
d. Reinigen der zweiten PE-Suspension in einer PE-Reinigungsausrüstung bei einer PE-Reinigungstemperatur und einem PE-Reinigungsdruck durch Berühren der zweiten PE-Suspension mit Feststoffmedien; wobei die PE-Reinigungsausrüstung eine Nennleistung aufweist; wobei die PE-Reinigungstemperatur von etwa 100 °C bis etwa 260 °C beträgt; wobei der PE-Reinigungsdruck über dem PE-Trübungspunktdruck liegt, der der PE-Reinigungstemperatur entspricht; und wobei eine dritte PE-Suspension, umfassend reineres PE, produziert wird;
e. Trennen des PE-Auflösungslösungsmittels von der dritten PE-Suspension in einer PE-Lösungsmitteltrennausrüstung, um die vlPE zu produzieren;
f. Extrahieren des PE-Leichtstroms mit einem PP-Extraktionslösungsmittel in einem PP-Extraktor bei einer PP-Extraktionstemperatur, einem PP-Extraktionsdruck und einem PP-Extraktionsmassenverhältnis des PP-Extraktionslösungsmittels zu dem PE-Leichtstrom, um einen PP-Leichtstrom und einen PP-Schwerstrom zu produzieren; wobei der PP-Extraktor eine Nennleistung aufweist; wobei das crPP zwei Phasen ausbildet und die niedermolekulare Fraktion des crPE zwei Phasen in dem PP-Extraktionslösungsmittel und in dem PP-Extraktor ausbildet; wobei die PP-Extraktionstemperatur von etwa 100 °C bis etwa 260 °C beträgt; wobei der PP-Extraktionsdruck unterhalb des PP-Trübungspunktdrucks liegt, der der PP-Extraktionstemperatur entspricht; wobei der PP-Leichtstrom die niedermolekulare Fraktion von crPE, eine niedermolekulare Fraktion von crPP (die in dem PP-Extraktionslösungsmittel in dem PP-Extraktor löslich sind) und die extrahierbare Kontamination des crPP umfasst; und wobei der PP-Schwerstrom das gesamte crPP minus die niedermolekulare Fraktion von crPP umfasst;
g. Auflösen des PP-Schwerstroms in einem PP-Auflösungslösungsmittel und einer PP-Auflösungsausrüstung bei einer PP-Auflösungstemperatur, einem PP-Auflösungsdruck und einer PP-Auflösungsmassenkonzentration von mindestens etwa 1 Gew.-%; wobei die PP-Auflösungsausrüstung eine Nennleistung aufweist; wobei die PP-Auflösungstemperatur von etwa 100 °C bis etwa 260 °C beträgt; wobei der PP-Auflösungsdruck über dem PP-Trübungspunktdruck liegt, der der PP-Auflösungstemperatur entspricht; und wobei eine erste PP-Suspension, umfassend aufgelöstes PP und suspendierte teilchenförmige Kontaminanten, produziert wird;
h. Absetzen der ersten PP-Suspension in einer PP-Absetzausrüstung bei einer PP-Absetztemperatur und einem PP-Absetzdruck; wobei die PP-Absetzausrüstung eine Nennleistung aufweist; wobei die PP-Absetztemperatur von etwa 100 °C bis etwa 260 °C beträgt; wobei der PP-Absetzdruck über dem PP-Trübungspunktdruck liegt, der der PP-Absetztemperatur entspricht; und wobei eine zweite PP-Suspension, umfassend aufgelöstes PP und suspendierte verbleibende teilchenförmige Kontaminanten, produziert wird;
i. Reinigen der zweiten PP-Suspension in einer PP-Reinigungsausrüstung bei einer PP-Reinigungstemperatur und einem PP-Reinigungsdruck durch Berühren der zweiten PP-Suspension mit Feststoffmedien; wobei die PP-Reinigungsausrüstung eine Nennleistung aufweist; wobei die PP-Reinigungstemperatur von etwa 100 °C bis etwa 260 °C beträgt; wobei der PP-Reinigungsdruck über dem PP-Trübungspunktdruck liegt, der der PP-Reinigungstemperatur entspricht; und wobei eine dritte PP-Suspension, umfassend reineres PP, produziert wird; und
j. Trennen des PP-Auflösungslösungsmittels von der dritten PP-Suspension in einer PP-Lösungsmitteltrennausrüstung, um die vlPP zu produzieren, und
wobei der PE-Auflösungsdruck, der PE-Absetzdruck und der PE-Reinigungsdruck alle gleich sind; und wobei der PP-Auflösungsdruck, der PP-Absetzdruck und der PP-Reinigungsdruck alle gleich sind;
und wobei die PE-Auflösungstemperatur, die PE-Absetztemperatur und die PE-Reinigungstemperatur alle gleich sind; und wobei die PP-Auflösungstemperatur, die PP-Absetztemperatur und die PP-Reinigungstemperatur alle gleich sind.

2. Verfahren nach Anspruch 1, wobei das crPE mindestens eines von Post-Consumer Recycled-Polyethylen (PCR-Polyethylen), Post-Industrial Recycled-Polyethylen (PIR-Polyethylen) oder Mischungen davon ist; und wobei das crPP mindestens eines von Post-Consumer Recycled-Polypropylen (PCR-Polypropylen), Post-Industrial Recycled-Polypropylen (PIR-Polypropylen) oder Mischungen davon ist.

3. Verfahren nach Anspruch 1 oder 2, wobei die vlPE parallel zu den vlPP produziert werden.

4. Verfahren nach Anspruch 1 oder 2, wobei die vlPE zuerst produziert werden und die vlPP als nächstes produziert werden; wobei der PE-Leichtstrom während der Produktion der vlPE gesammelt wird; wobei der PE-Leichtstrom dann in den PP-Extraktor eingespeist wird; wobei der PP-Extraktor derselbe ist wie der PE-Extraktor; wobei die PP-Auflösungsausrüstung dieselbe ist wie die PE-Auflösungsausrüstung; wobei die PP-Absetzausrüstung dieselbe ist wie die PE-Absetzausrüstung; wobei die PP-Reinigungsausrüstung dieselbe ist wie die PE-Reinigungsausrüstung; und wobei die PP-Lösungsmitteltrennausrüstung dieselbe ist wie die PE-Lösungsmitteltrennausrüstung.

5. Verfahren nach einem der Ansprüche 1 bis 4, wobei das PE-Extraktionslösungsmittel, das PE-Auflösungslösungsmittel, das PP-Extraktionslösungsmittel und das PP-Auflösungslösungsmittel alle n-Butan sind; wobei die PE-Extraktionstemperatur und die PP-Extraktionstemperatur von etwa 110 °C bis etwa 200 °C betragen; wobei der PE-Extraktionsdruck von etwa 1000 psig (69 bar) bis etwa 3500 psig (241 bar) beträgt; wobei der PE-Auflösungsdruck, der PE-Absetzdruck und der PE-Reinigungsdruck alle von etwa 4000 psig (276 bar) bis etwa 5500 psig (379 bar) betragen; wobei der PP-Extraktionsdruck von etwa 200 psig (14 bar) bis etwa 2000 psig (138 bar) beträgt; und wobei der PP-Auflösungsdruck, der PP-Absetzdruck und der PP-Reinigungsdruck von etwa 700 psig (48 bar) bis etwa 3500 psig (241 bar) betragen.

6. Verfahren nach Anspruch 5, wobei die PE-Extraktionstemperatur, die PE-Auflösungstemperatur, die PE-Absetztemperatur, die PE-Reinigungstemperatur und die PP-Extraktionstemperatur alle etwa 160 °C betragen.

7. Verfahren nach Anspruch 6, wobei der PP-Extraktionsdruck, der PP-Auflösungsdruck, der PP-Absetzdruck und der PP-Reinigungsdruck alle etwa 1200 psig (83 bar) betragen.

8. Verfahren nach Anspruch 5, wobei das PE-Extraktionslösungsmittel, das PE-Auflösungslösungsmittel, das PP-Extraktionslösungsmittel und das PP-Auflösungslösungsmittel alle n-Butan sind; wobei die PE-Extraktionstemperatur, die PE-Auflösungstemperatur, die PE-Absetztemperatur und die PE-Reinigungstemperatur alle etwa 160 °C betragen; wobei der PE-Extraktionsdruck etwa 3000 psig (207 bar) beträgt; wobei der PE-Auflösungsdruck, der PE-Absetzdruck und der PE-Reinigungsdruck alle etwa 4700 psig (324 psi) betragen; wobei die PE-Extraktionstemperatur etwa 160 °C beträgt; wobei die PP-Auflösungstemperatur, die PP-Absetztemperatur und die PP-Reinigungstemperatur alle etwa 115 °C betragen; und wobei der PP-Extraktionsdruck, der PP-Auflösungsdruck, der PP-Absetzdruck und der PP-Reinigungsdruck alle etwa 1200 psig (83 bar) betragen.

9. Verfahren nach Anspruch 5, wobei das PE-Extraktionslösungsmittel, das PE-Auflösungslösungsmittel, das PP-Extraktionslösungsmittel und das PP-Auflösungslösungsmittel alle n-Butan sind; wobei die PE-Extraktionstemperatur, die PE-Auflösungstemperatur, die PE-Absetztemperatur und die PE-Reinigungstemperatur alle etwa 140 °C betragen; wobei der PE-Extraktionsdruck etwa 2500 psig (172 bar) beträgt; wobei der PE-Auflösungsdruck, der PE-Absetzdruck und der PE-Reinigungsdruck alle etwa 4300 psig (296 bar) betragen; wobei die PP-Extraktionstemperatur, die PP-Auflösungstemperatur, die PP-Absetztemperatur und die PP-Reinigungstemperatur alle etwa 140 °C betragen; wobei der PP-Extraktionsdruck etwa 900 psig (62 bar) beträgt; und wobei der PP-Auflösungsdruck, der PP-Absetzdruck und der PP-Reinigungsdruck alle etwa 1800 psig (124 bar) betragen.

10. Verfahren nach einem der Ansprüche 1 bis 4, wobei das PE-Extraktionslösungsmittel, das PE-Auflösungslösungsmittel, das PP-Extraktionslösungsmittel und das PP-Auflösungslösungsmittel alle n-Pentan sind; wobei die PE-Extraktionstemperatur und die PP-Extraktionstemperatur von etwa 120 °C bis etwa 240 °C betragen; wobei der PE-Extraktionsdruck von etwa 500 psig (34 bar) bis etwa 2800 psig (193 bar) beträgt; wobei der PE-Auflösungsdruck, der PE-Absetzdruck und der PE-Reinigungsdruck alle von etwa 2000 psig (138 bar) bis etwa 4000 psig (276 bar) betragen; wobei der PP-Extraktionsdruck von etwa 200 psig (14 bar) bis etwa 1500 psig (103 bar) beträgt; und wobei der PP-Auflösungsdruck, der PP-Absetzdruck und der PP-Reinigungsdruck von etwa 700 psig (48 bar) bis etwa 2800 psig (193 bar) betragen.

11. Verfahren nach Anspruch 10, wobei die PE-Extraktionstemperatur, die PE-Auflösungstemperatur, die PE-Absetztemperatur und die PE-Reinigungstemperatur alle etwa 220 °C betragen; wobei der PE-Extraktionsdruck etwa 2200 psig (152 bar) beträgt; wobei der PE-Auflösungsdruck, der PE-Absetzdruck und der PE-Reinigungsdruck alle etwa 3800 psig (262 bar) betragen; wobei die PP-Extraktionstemperatur etwa 220 °C beträgt; wobei der PP-Extraktionsdruck von etwa 200 psig (14 bar) bis etwa 1500 psig (103 bar) beträgt; und wobei der PP-Auflösungsdruck, der PP-Absetzdruck und der PP-Reinigungsdruck alle etwa 900 psig (62 bar) betragen.

12. Verfahren nach Anspruch 11, wobei die PE-Extraktionstemperatur etwa 205 °C beträgt; wobei die PE-Auflösungstemperatur, die PE-Absetztemperatur und die PE-Reinigungstemperatur alle etwa 140 °C betragen; wobei der PE-Extraktionsdruck, der PE-Auflösungsdruck, der PE-Absetzdruck und der PE-Reinigungsdruck alle etwa 1900 psig (131 bar) betragen; wobei die PP-Extraktionstemperatur etwa 205 °C beträgt; wobei die PP-Auflösungstemperatur, die PP-Absetztemperatur und die PP-Reinigungstemperatur alle etwa 140 °C betragen; und wobei der PP-Extraktionsdruck, der PP-Auflösungsdruck, der PP-Absetzdruck und der PP-Reinigungsdruck alle etwa 900 psig (62 bar) betragen.

13. Verfahren nach einem der vorstehenden Ansprüche, wobei die Feststoffmedien mindestens eines von anorganischem Material, kohlenstoffbasiertem Material oder Mischungen davon sind.

## Revendications

1. Procédé de séparation et de purification d'un flux mixte de polyéthylène récupéré contaminé (crPE) et de polypropylène récupéré contaminé (crPP) pour produire des flux séparés de polyéthylène recyclé purifié ayant des propriétés optiques de type vierge (vIPE) et de polypropylène recyclé purifié ayant des propriétés optiques de type vierge (vIPP), comprenant :
a. l'extraction dudit flux mixte de crPE et de crPP avec un solvant d'extraction de polyéthylène (PE) dans un extracteur de PE à une température d'extraction de PE, à une pression d'extraction de PE et à un rapport de masse d'extraction de PE dudit solvant d'extraction de PE audit flux mixte de crPE et de crPP pour produire un flux léger de PE et un flux lourd de PE ; dans lequel ledit extracteur de PE a une capacité de plaque signalétique ; dans lequel ledit crPE forme deux phases et ledit crPP forme une phase dans ledit solvant d'extraction de PE et dans ledit extracteur de PE ; dans lequel ladite température d'extraction de PE est comprise entre environ 100 °C et environ 260 °C ; dans lequel ladite pression d'extraction de PE est comprise entre la pression de point de trouble du PE et la pression de point de trouble du polypropylène (PP) correspondant à ladite température d'extraction de PE ; dans lequel ledit flux léger de PE comprend ledit crPP, une fraction de faible poids moléculaire de crPE (qui est soluble dans ledit solvant d'extraction de PE dans ledit extracteur de PE), et la contamination extractible dudit crPE ; et dans lequel ledit flux lourd de PE comprend ledit crPE moins ladite fraction de faible poids moléculaire de crPE ;
b. la dissolution dudit flux lourd de PE dans un solvant de dissolution de PE et dans un équipement de dissolution de PE à une température de dissolution de PE, à une pression de dissolution de PE et à une concentration massique de dissolution de PE d'au moins environ 1 % en poids ; dans lequel ledit équipement de dissolution de PE a une capacité de plaque signalétique ; dans lequel ladite température de dissolution du PE est comprise entre environ 100 °C et environ 260 °C ; dans lequel ladite pression de dissolution du PE est supérieure à la pression du point de trouble du PE correspondant à ladite température de dissolution du PE ; et dans lequel une première suspension de PE comprenant du PE dissous et des contaminants particulaires en suspension est produite ;
c. la décantation de ladite première suspension de PE dans un équipement de décantation de PE à une température de décantation de PE et à une pression de décantation de PE ; dans lequel ledit équipement de décantation de PE a une capacité de plaque signalétique ; dans lequel ladite température de décantation de PE est comprise entre environ 100 °C et environ 260 °C ; dans lequel ladite pression de décantation de PE est supérieure à la pression de point de trouble de PE correspondant à ladite température de décantation de PE ; et dans lequel une deuxième suspension de PE comprenant du PE dissous et des contaminants particulaires restants en suspension est produite ;
d. la purification de ladite deuxième suspension de PE dans un équipement de purification de PE à une température de purification de PE et à une pression de purification de PE en mettant en contact ladite deuxième suspension de PE avec un milieu solide ; dans lequel ledit équipement de purification de PE a une capacité de plaque signalétique ; dans lequel ladite température de purification de PE est comprise entre environ 100 °C et environ 260 °C ; dans lequel ladite pression de purification de PE est supérieure à la pression de point de trouble de PE correspondant à ladite température de purification de PE ; et dans lequel une troisième suspension de PE comprenant du PE plus pur est produite ;
e. la séparation dudit solvant de dissolution de PE de ladite troisième suspension de PE dans un équipement de séparation de solvant de PE pour produire lesdites vIPE ;
f. l'extraction dudit flux léger de PE avec un solvant d'extraction de PP dans un extracteur de PP à une température d'extraction de PP, à une pression d'extraction de PP et à un rapport de masse d'extraction de PP dudit solvant d'extraction de PP audit flux léger de PE pour produire un flux léger de PP et un flux lourd de PP ; dans lequel ledit extracteur de PP a une capacité de plaque signalétique ; dans lequel ledit crPP forme deux phases et ladite fraction de faible poids moléculaire de crPE forme deux phases dans ledit solvant d'extraction de PP et dans ledit extracteur de PP ; dans lequel ladite température d'extraction de PP est comprise entre environ 100 °C et environ 260 °C ; dans lequel ladite pression d'extraction de PP est inférieure à la pression du point de trouble de PP correspondant à ladite température d'extraction de PP ; dans lequel ledit flux léger de PP comprend ladite fraction de faible poids moléculaire de crPE, une fraction de faible poids moléculaire de crPP (qui est soluble dans ledit solvant d'extraction de PP dans ledit extracteur de PP), et la contamination extractible dudit crPP ; et dans lequel ledit flux lourd de PP comprend la totalité de crPP moins ladite fraction de faible poids moléculaire de crPP ;
g. la dissolution dudit flux lourd de PP dans un solvant de dissolution de PP et un équipement de dissolution de PP à une température de dissolution de PP, à une pression de dissolution de PP et à une concentration massique de dissolution de PP d'au moins environ 1 % en poids ; dans lequel ledit équipement de dissolution de PP a une capacité de plaque signalétique ; dans lequel ladite température de dissolution du PP est comprise entre environ 100 °C et environ 260 °C ; dans lequel ladite pression de dissolution du PP est supérieure à la pression du point de trouble du PP correspondant à ladite température de dissolution du PP ; et dans lequel une première suspension de PP comprenant du PP dissous et des contaminants particulaires en suspension est produite ;
h. la décantation de ladite première suspension de PP dans un équipement de décantation de PP à une température de décantation de PP et à une pression de décantation de PP ; dans lequel ledit équipement de décantation de PP a une capacité de plaque signalétique ; dans lequel ladite température de décantation de PP est comprise entre environ 100 °C et environ 260 °C ; dans lequel ladite pression de décantation de PP est supérieure à la pression de point de trouble de PP correspondant à ladite température de décantation de PP ; et dans lequel une deuxième suspension de PP comprenant du PP dissous et des contaminants particulaires restants en suspension est produite ;
i. la purification de ladite deuxième suspension de PP dans un équipement de purification de PP à une température de purification de PP et à une pression de purification de PP en mettant en contact ladite deuxième suspension de PP avec un milieu solide ; dans lequel ledit équipement de purification de PP a une capacité de plaque signalétique ; dans lequel ladite température de purification de PP est comprise entre environ 100 °C et environ 260 °C ; dans lequel ladite pression de purification de PP est supérieure à la pression de point de trouble de PP correspondant à ladite température de purification de PP ; et dans lequel une troisième suspension de PP comprenant du PP plus pur est produite ; et
j. la séparation dudit solvant de dissolution de PP de ladite troisième suspension de PP dans un équipement de séparation de solvant de PP pour produire lesdites vIPP, et
dans lequel ladite pression de dissolution du PE, ladite pression de décantation de PE et ladite pression de purification de PE sont toutes identiques ; et dans lequel ladite pression de dissolution de PP, ladite pression de décantation de PP et ladite pression de purification de PP sont toutes identiques ;
et ladite température de dissolution du PE, ladite température de décantation du PE et ladite température de purification de PE sont toutes identiques ; et dans lequel ladite température de dissolution de PP, ladite température de décantation de PP et ladite température de purification de PP sont toutes identiques.

2. Procédé selon la revendication 1, dans lequel ledit crPE est au moins l'un parmi du polyéthylène recyclé post-consommation (PCR), du polyéthylène recyclé post-industriel (PIR), ou leurs mélanges ; et dans lequel ledit crPP est au moins l'un parmi du polypropylène recyclé post-consommation (PCR), du polypropylène recyclé post-industriel (PIR), ou leurs mélanges.

3. Procédé selon la revendication 1 ou 2, dans lequel lesdites vIPE sont produites en parallèle avec lesdites vIPP.

4. Procédé selon la revendication 1 ou 2, dans lequel lesdites vIPE sont produites en premier et lesdites vIPP sont produites ensuite ; dans lequel ledit flux lumineux de PE est collecté pendant la production desdites vIPE ; dans lequel ledit flux lumineux de PE est ensuite introduit dans ledit extracteur de PP ; dans lequel ledit extracteur de PP est le même que ledit extracteur de PE ; dans lequel ledit équipement de dissolution de PP est identique audit équipement de dissolution de PE ; dans lequel ledit équipement de décantation de PP est identique audit équipement de décantation de PE ; dans lequel ledit équipement de purification de PP est le même que ledit équipement de purification de PE ; et dans lequel ledit équipement de séparation de solvant de PP est identique audit équipement de séparation de solvant de PE.

5. Procédé selon l'une quelconque des revendications 1 à 4, dans lequel ledit solvant d'extraction de PE, ledit solvant de dissolution de PE, ledit solvant d'extraction de PP et ledit solvant de dissolution de PP sont tous du n-butane ; dans lequel ladite température d'extraction de PE et ladite température d'extraction de PP sont comprises entre environ 110 °C et environ 200 °C ; dans lequel ladite pression d'extraction de PE est comprise entre environ 1 000 psig (69 bar) et environ 3 500 psig (241 bar) ; dans lequel ladite pression de dissolution de PE, ladite pression de décantation de PE et ladite pression de purification de PE sont toutes d'environ 4 000 psig (276 bar) à environ 5 500 psig (379 bar) ; dans lequel ladite pression d'extraction de PP est comprise entre environ 200 psig (14 bars) et environ 2 000 psig (138 bars) ; et dans lequel ladite pression de dissolution du PP, ladite pression de décantation du PP et ladite pression de purification du PP sont d'environ 700 psig (48 bars) à environ 3500 psig (241 bars).

6. Procédé selon la revendication 5, dans lequel ladite température d'extraction de PE, ladite température de dissolution de PE, ladite température de décantation de PE, ladite température de purification de PE et ladite température d'extraction de PP sont toutes d'environ 160 °C.

7. Procédé selon la revendication 6, dans lequel ladite pression d'extraction de PP, ladite pression de dissolution de PP, ladite pression de décantation de PP, et ladite pression de purification de PP sont toutes d'environ 1200 psig (83 bar).

8. Procédé selon la revendication 5, dans lequel ledit solvant d'extraction de PE, ledit solvant de dissolution de PE, ledit solvant d'extraction de PP et ledit solvant de dissolution de PP sont tous du n-butane ; dans lequel ladite température d'extraction de PE, ladite température de dissolution de PE, ladite température de décantation de PE et ladite température de purification de PE sont toutes d'environ 160 °C ; dans lequel ladite pression d'extraction de PE est d'environ 3 000 psig (207 bar) ; dans lequel ladite pression de dissolution de PE, ladite pression de décantation de PE et ladite pression de purification de PE sont toutes d'environ 4700 psig (324 psi) ; dans lequel ladite température est d'environ 160 °C ; dans lequel ladite température de dissolution de PP, ladite température de décantation de PP et ladite température de purification de PP sont toutes d'environ 115 °C ; et dans lequel ladite pression d'extraction de PP, ladite pression de dissolution de PP, ladite pression de décantation de PP, et ladite pression de purification de PP sont toutes d'environ 1 200 psig (83 bar).

9. Procédé selon la revendication 5, dans lequel ledit solvant d'extraction de PE, ledit solvant de dissolution de PE, ledit solvant d'extraction de PP et ledit solvant de dissolution de PP sont tous du n-butane ; dans lequel ladite température d'extraction de PE, ladite température de dissolution de PE, ladite température de décantation de PE et ladite température de purification de PE sont toutes d'environ 140 °C ; dans lequel ladite pression d'extraction de PE est d'environ 2500 psig (172 bar) ; dans lequel ladite pression de dissolution de PE, ladite pression de décantation de PE et ladite pression de purification du PE sont toutes d'environ 4 300 psig (296 bar) ; dans lequel ladite température d'extraction de PP, ladite température de dissolution de PP, ladite température de décantation de PP et ladite température de purification de PP sont toutes d'environ 140 °C ; dans lequel ladite pression d'extraction de PP est d'environ 900 psig (62 bar) ; et dans lequel ladite pression de dissolution de PP, ladite pression de décantation de PP et ladite pression de purification de PP sont toutes d'environ 1 800 psig (124 bar).

10. Procédé selon l'une quelconque des revendications 1 à 4, dans lequel ledit solvant d'extraction PE, ledit solvant de dissolution PE, ledit solvant d'extraction PP, et ledit solvant de dissolution PP sont tous du n-pentane ; dans lequel ladite température d'extraction de PE et ladite température d'extraction de PP sont comprises entre environ 120 °C et environ 240 °C ; dans lequel ladite pression d'extraction de PE est comprise entre environ 500 psig (34 bar) et environ 2 800 psig (193 bar) ; dans lequel ladite pression de dissolution de PE, ladite pression de décantation de PE et ladite pression de purification de PE sont toutes d'environ 2 000 psig (138 bar) à environ 4 000 psig (276 bar) ; dans lequel ladite pression d'extraction de PP est comprise entre environ 200 psig (14 bars) et environ 1 500 psig (103 bars) ; et dans lequel ladite pression de dissolution de PP, ladite pression de décantation de PP et ladite pression de purification du PP sont d'environ 700 psig (48 bar) à environ 2800 psig (193 bar).

11. Procédé selon la revendication 10, dans lequel ladite température d'extraction de PE, ladite température de dissolution de PE, ladite température de décantation de PE et ladite température de purification de PE sont toutes d'environ 220 °C ; dans lequel ladite pression d'extraction de PE est d'environ 2200 psig (152 bar) ; dans lequel ladite pression de dissolution de PE, ladite pression de décantation de PE et ladite pression de purification de PE sont toutes d'environ 3800 psig (262 bar) ; dans lequel ladite température est d'environ 220 °C ; dans lequel ladite pression d'extraction de PP est comprise entre environ 200 psig (14 bars) et environ 1 500 psig (103 bars) ; et dans lequel ladite pression de dissolution de PP, ladite pression de décantation de PP et ladite pression de purification de PP sont toutes d'environ 900 psig (62 bar).

12. Procédé selon la revendication 11, dans lequel ladite température d'extraction de PE est d'environ 205 °C ; dans lequel ladite température de dissolution de PE, ladite température de décantation de PE et ladite température de purification de PE sont toutes d'environ 140 °C ; dans lequel ladite pression d'extraction de PE, ladite pression de dissolution de PE, ladite pression de décantation de PE, et ladite pression de purification de PE sont toutes d'environ 1900 psig (131 bar) ; dans lequel ladite température est d'environ 205 °C ; dans lequel ladite température de dissolution de PP, ladite température de décantation de PP et ladite température de purification de PP sont toutes d'environ 140 °C ; et dans lequel ladite pression d'extraction de PP, ladite pression de dissolution de PP, ladite pression de décantation de PP, et ladite pression de purification de PP sont toutes d'environ 900 psig (62 bar).

13. Procédé selon l'une quelconque des revendications précédentes, dans lequel lesdits milieux solides sont au moins l'un parmi un matériau inorganique, un matériau à base de carbone, ou leurs mélanges.
